(19) Europäisches Patentamt
European Patent Office
Office européen des brevets

(11) **EP 3 376 622 B1**

(12) **EUROPÄISCHE PATENTSCHRIFT**

(45) Veröffentlichungstag und Bekanntmachung des Hinweises auf die Patenterteilung:
**24.11.2021 Patentblatt 2021/47**

(51) Int Cl.:
***H02H 3/40*** *(2006.01)*      ***H02H 7/26*** *(2006.01)*

(21) Anmeldenummer: **17160528.0**

(22) Anmeldetag: **13.03.2017**

(54) **VERFAHREN, SYSTEM UND SCHUTZEINRICHTUNG ZUM ERZEUGEN EINES EINE FEHLERART EINES FEHLERS IN EINEM MEHRPHASIGEN ELEKTRISCHEN ENERGIEVERSORGUNGSNETZ ANGEBENDEN FEHLERSIGNALS**

METHOD, SYSTEM AND PROTECTION DEVICE FOR PRODUCING AN ERROR SIGNAL INDICATING A FAULT TYPE OF A FAULT IN A POLYPHASE ELECTRICAL POWER SUPPLY

PROCÉDÉ, SYSTÈME ET DISPOSITIF DE PROTECTION DESTINÉS À PRODUIRE UN SIGNAL D'ERREUR INDIQUANT UN TYPE D'ERREUR DANS UN RÉSEAU D'ALIMENTATION ÉLECTRIQUE MULTIPHASES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.09.2018 Patentblatt 2018/38**

(73) Patentinhaber: **Siemens Aktiengesellschaft 80333 München (DE)**

(72) Erfinder:
• **Dzienis, Cezary**
  **14624 Dallgow-Döberitz (DE)**
• **Michl, Maximilian**
  **10707 Berlin (DE)**
• **Yelgin, Yilmaz**
  **13589 Berlin (DE)**

(56) Entgegenhaltungen:
**WO-A1-2016/091334    RU-C1- 2 548 666
US-A- 4 812 995**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Erzeugen eines eine Fehlerart eines Fehlers in einem mehrphasigen elektrischen Energieversorgungsnetz angebenden Fehlersignals, bei dem an mindestens einer Messstelle in dem Energieversorgungsnetz Messwerte erfasst werden und an eine Schutzeinrichtung übermittelt werden, mittels einer Auswerteinrichtung der Schutzeinrichtung unter Verwendung der Messwerte jede mögliche Schleife des Energieversorgungsnetzes, die von einem Fehler betroffen sein kann, hinsichtlich der Erkennung der Fehlerart eines Fehlers ausgewertet wird, indem für jede mögliche Schleife die Messwerte und/oder aus den Messwerten abgeleitete Werte unter Verwendung von zumindest zwei unterschiedlichen Schutzkriterien ausgewertet werden, wobei jedes der Schutzkriterien dazu geeignet ist, eine Fehlerart eines vorliegenden Fehlers in der jeweils ausgewerteten Schleife hinzuweisen, das Ergebnis der Auswertung des jeweiligen Schutzkriteriums unter Bildung eines gewichteten Ergebnisses mit einem jeweiligen Gewichtungsfaktor multipliziert wird, für jede mögliche Schleife alle gewichteten Ergebnisse unter Bildung eines Gesamtergebnisses verknüpft werden und bei Vorliegen eines Fehlers das Fehlersignal unter Berücksichtigung aller vorliegenden Gesamtergebnisse der Auswertung der Schutzkriterien erzeugt wird, wobei die Höhe der jeweiligen Gewichtungsfaktoren in Abhängigkeit von einem aktuellen Betriebszustand des Energieversorgungsnetzes gewählt wird, wobei zur Ermittlung des aktuellen Betriebszustands mindestens eine Schaltstellung zumindest einer in dem Energieversorgungsnetz angeordneten Schalteinrichtung und/oder an zumindest einer Messstelle in dem Energieversorgungsnetz erfasste Messwerte zumindest einer elektrischen Messgröße herangezogen werden.

Die Erfindung bezieht sich auch auf ein System zum Erzeugen eines eine Fehlerart eines Fehlers in einem mehrphasigen elektrischen Energieversorgungsnetz angebenden Fehlersignals.

Zur Überwachung von Primärkomponenten, z.B. Leitungen, elektrischer Energieversorgungsnetze werden sogenannte Schutzeinrichtungen eingesetzt, um unzulässige Betriebszustände der jeweils überwachten Primärkomponente, die beispielsweise durch Kurzschlüsse oder Erdkurzschlüsse hervorgerufen sein können, zu erkennen und automatisch abzuschalten. Hierzu nimmt die Schutzeinrichtung üblicherweise an einer oder mehreren Messstellen in dem Energieversorgungsnetz Messwerte auf, beispielsweise Strom- und/oder Spannungsmesswerte. Zur Ausführung seiner Schutzfunktion, wertet die Schutzeinrichtung daraufhin die Messwerte unter Ausführung eines sogenannten Schutzalgorithmus, also einer Berechnungs- und/oder logischen Verknüpfungsvorschrift zur Auswertung der aufgenommenen Messwerte, aus und erzeugt in Abhängigkeit vom Ergebnis der Auswertung gegebenenfalls ein Auslösesignal, das einen mit der Schutzeinrichtung in Verbindung stehenden Leistungsschalter zum Öffnen seiner Schaltkontakte veranlasst, um die fehlerbehaftete Leitung vom übrigen Energieversorgungsnetz abzutrennen.

Ein Beispiel eines häufig zur Überwachung von Leitungen elektrischer Energieversorgungsnetze eingesetzten Schutzalgorithmus arbeitet nach dem sogenannten Distanzschutzverfahren, bei dem aus Strom- und Spannungsmesswerten in einer komplexen Zahlenebene liegende Impedanzwerte berechnet werden und überprüft wird, ob die Impedanzwerte innerhalb eines - auch als Auslösepolygon bezeichneten - vorgegebenen Auslösebereiches liegen. Sofern die Impedanzwerte innerhalb dieses vorgegebenen Auslösebereiches liegen, stellt die Schutzeinrichtung einen unzulässigen Betriebszustand an der von ihr überwachten Leitung des elektrischen Energieversorgungsnetzes fest und sendet ein Auslösesignal an einen oder mehrere die Leitung begrenzende Leistungsschalter, um die fehlerhafte Leitung vom restlichen Energieversorgungsnetz zu trennen.

Wichtig im Zusammenhang mit der Erkennung von Fehlern in Energieversorgungsnetzen ist neben der Frage, ob überhaupt ein Fehler aufgetreten ist, auch die Frage nach einer Fehlerart des Fehlers. Eine Fehlerart charakterisiert den vorliegenden Fehler konkreter und gibt beispielsweise an, in welcher möglichen Fehlerschleife des mehrphasigen Energieversorgungsnetzes und/oder in welcher Richtung von der Messstelle aus gesehen der Fehler vorliegt. Die korrekte Ermittlung der fehlerbehafteten Phasen bzw. der aus den Phasen gebildeten Fehlerschleife ist nämlich ein wichtiger Faktor für die richtige Reaktion einer Schutzfunktion. Die Auswertung von Schutzkriterien, wie das der Impedanz beim Distanzschutz, der Stromhöhe beim Überstromzeitschutz sowie des Differential-Stroms beim Differentialschutz, liefert nur dann korrekte Ergebnisse, wenn die tatsächlich am Kurzschluss beteiligten Phasen herangezogen werden. Wertet man hingegen die nicht am Kurzschluss beteiligten Phasen aus, kann in einigen Fällen eine falsche Reaktion der Schutzeinrichtung eintreten.

Bei einem dreiphasigen Energieversorgungsnetz mit drei Leitern (Leiter 1, Leiter 2, Leiter 3) existieren abhängig von den am Fehler beteiligten Leitern sieben mögliche Fehlerschleifen; in nachfolgender Aufstellung sind jeweils die möglichen an einem Fehler beteiligten Leiter sowie die jeweilige in diesem Dokument für die fragliche Fehlerschleife verwendete Abkürzung angegeben:

| | |
|---|---|
| Einpoliger Fehler Leiter 1 - Erde: | L1E; |
| Einpoliger Fehler Leiter 2 - Erde: | L2E; |
| Einpoliger Fehler Leiter 3 - Erde: | L3E; |
| Zweipoliger Fehler Leiter 1 - Leiter 2: | L12; |

| Zweipoliger Fehler Leiter 2 - Leiter 3: | L23; |
| Zweipoliger Fehler Leiter 3 - Leiter 1: | L31; |
| Dreipoliger Fehler Leiter 1 - Leiter 2 - Leiter 3: | L123. |

In Abhängigkeit von einer erkannten Fehlerart kann ein vorliegender Fehler in dem Energieversorgungsnetz selektiv, d.h. auf die von dem Fehler betroffenen Leiter und/oder in der entsprechenden Richtung von der Messstelle aus gesehen abgeschaltet werden, so dass ein Weiterbetrieb der übrigen Netzteile ermöglicht wird.

Aus der Europäischen Patentschrift EP 2 304 857 B1 ist es beispielsweise bekannt, die Fehlerart eines Fehlers in Form einer fehlerbehafteten Schleife durch die Betrachtung einer sogenannten Impedanzänderungsrate zu erkennen. Diejenige Schleife, die die kleinste Impedanzänderungsrate aufweist, wird als fehlerbehaftete Schleife ausgewählt und es wird ein die Fehlerart (hier: Fehler liegt in der erkannten Schleife vor) angebendes Fehlersignal erzeugt. Gemäß dem bekannten Verfahren wird das Fehlersignal dazu verwendet, eine Blockierung einer zuvor aufgrund einer vorhandenen Netzpendelung blockierten Schutzzone aufzuheben, damit der Fehler abgeschaltet werden kann. Bei dem bekannten Verfahren verlässt sich die Auswertung hinsichtlich der fehlerbehafteten Schleife ausschließlich auf die Impedanzänderungsrate.

Dies birgt die Gefahr, dass bei Fehlern, bei denen die Impedanzänderungsrate kein ausreichendes Schutzkriterium darstellt, eine Fehlentscheidung getroffen wird und somit entweder ungewollt eine Abschaltung eines eigentlich fehlerfreien Netzteils ausgelöst wird oder eine eigentlich notwendige Abschaltung eines fehlerbehafteten Netzteils ungewollt nicht stattfindet.

Aufgrund jüngerer Entwicklungen im Bereich der Energieversorgungsnetze, beispielsweise die Liberalisierung der Stromerzeugungsmärkte und ein damit verbundenes Aufbrechen althergebrachter Stromübertragungsrichtungen im Energieversorgungsnetz durch dezentrale Stromeinspeisung, werden an Schutzeinrichtungen in Energieversorgungsnetzen immer höhere Anforderungen hinsichtlich ihrer Zuverlässigkeit und Selektivität gestellt, so dass eine flexible und adaptive Möglichkeit der Anpassung der jeweils verwendeten Schutzkriterien zur Erkennung einer Fehlerart benötigt wird.

Aus diesem Grund hat die Patentanmelderin in jüngerer Zeit vorgeschlagen, die Fehlerart eines Fehlers in einem Energieversorgungsnetz nicht allein durch Auswertung eines einzelnen Schutzkriteriums zu ermitteln, sondern hierfür mehrere Schutzkriterien einzusetzen, die parallel zueinander eingesetzt werden. Ein entsprechendes Verfahren und eine entsprechende Schutzeinrichtung sind beispielsweise aus der WO 2016/091334 A1 derselben Patentanmelderin bekannt. Hier wird ein multi-kriterielles Verfahren beschrieben, welches eine Fehlerart, z.B. eine Angabe der Fehlerschleife mit Hilfe gewichteter Schutzkriterien durchführt. Nach dem Multiplizieren der Einzelnen Ergebnisse der jeweiligen Schutzkriterien mit einem jeweiligen Gewichtungsfaktor werden die gewichteten Ergebnisse zu einem Gesamtergebnis verknüpft, z.B. durch Summenbildung. Das Gesamtergebnis gibt quasi die Wahrscheinlichkeit an, mit der die jeweils betrachtete Schleife von dem Fehler betroffen ist.

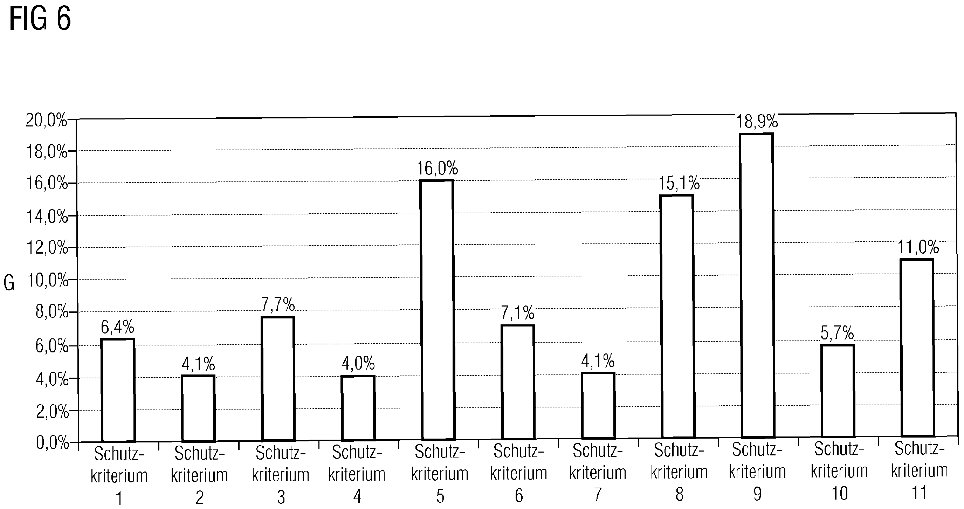

Für die Ermittlung der Gewichtungsfaktoren der Schutzkriterien können beispielsweise Tests bei unterschiedlichen Netzbedingungen sowie Netzkonstellationen durchgeführt werden. Aus diesem Testumfang können solche Gewichtungsfaktoren berechnet werden, mit denen die bestmögliche Fehlererkennung stattfinden kann. Diese Gewichtungsfaktoren werden der Schutzeinrichtung statisch vorgegeben. Beispielhaft ist eine solche durch Tests ermittelte statische Vorgabe von Gewichtungsfaktoren in Figur 6 dargestellt. In diesem Zusammenhang werden grundsätzlich solche Gewichtungsfaktoren ausgewählt, die für eine zuverlässige Fehlererkennung den besten Kompromiss darstellen, also für die unterschiedlichsten Fehler an verschiedenen Orten und zu verschiedenen Netzzuständen die besten Ergebnisse liefern.

Darüber hinaus schlägt die WO 2016/091334 A1 auch vor, die Höhe der Gewichtungsfaktoren kontinuierlich auszuwählen, lässt die genaue Vorgehensweise hierfür aber offen.

Davon ausgehend liegt der Erfindung die Aufgabe zugrunde, die Fehlerart eines Fehlers mit noch größerer Genauigkeit und Zuverlässigkeit angeben zu können.

Diese Aufgabe wird durch ein im Anspruch 1 definiertes Verfahren der eingangs genannten Art gelöst, bei dem die Schaltstellung der zumindest einen Schalteinrichtung und/oder die Messwerte der zumindest einen elektrischen Messgröße von einer der Schutzeinrichtung übergeordneten Leitstelleneinrichtung erfasst werden; und der aktuelle Betriebszustand von der Leitstelleneinrichtung ermittelt wird, wobei zur Bestimmung der Höhe der jeweiligen Gewichtungsfaktoren von der Leitstelleneinrichtung unter Verwendung eines zumindest einen Teil des Energieversorgungsnetzes beschreibenden mathematischen Netzmodells und dem aktuellen Betriebszustand des Energieversorgungsnetzes eine Simulation zumindest eines Fehlers in dem Energieversorgungsnetz durchgeführt wird, wobei ein solcher Fehler simuliert wird, der im Energieversorgungsnetz zu einer Abgabe des Fehlersignals durch die Schutzeinrichtung führen soll, wobei zur Bestimmung der Höhe der jeweiligen Gewichtungsfaktoren die Reaktion der zumindest zwei Schutzkriterien auf den simulierten Fehler betrachtet wird und die Gewichtungsfaktoren in der Weise festgelegt werden, dass ein solches Schutzkriterium, das den simulierten Fehler korrekt erkannt hat, gegenüber einem solchen Schutzkriterium, das den simulierten Fehler nicht korrekt erkannt hat, mit einem höheren Gewichtungsfaktor multipliziert wird.

Der Erfindung liegt somit die Erkenntnis zugrunde, dass sich aus dem aktuellen Betriebszustand des Energieversorgungsnetzes Werte für die Höhe der jeweiligen Gewichtungsfaktoren ableiten lassen, die zu einer verbesserten Erkennung der Fehlerart eines Fehlers führen, indem sie z.B. eine optimale Reaktion eines Fehlerschleifenauswahl-Algorithmus führen. Zu diesem Zweck wird in vorteilhafter Weise ein adaptiver Verfahren einzusetzen, um die Zuverlässigkeit des Algorithmus zu erhöhen.

Es hat sich nämlich herausgestellt, dass die unterschiedlichen zur Ermittlung der Fehlerart eines Fehlers herangezogenen Schutzkriterien in Abhängigkeit vom aktuellen Betriebszustand des Energieversorgungsnetzes unterschiedlich gute Ergebnisse liefern. Im Extremfall können z.B. Situationen auftreten, in denen bestimmte Schutzkriterien nicht fehlerbehaftete Schleifen als Kurzschlussschleifen erkennen. In diesem Fall kann durch eine Reduzierung der Höhe des jeweiligen Gewichtungsfaktors ein negativer Einfluss auf die Schleifenauswahl verhindert werden.

Die vorliegende Erfindung zielt somit darauf ab, sich diese Erkenntnis zu Nutze zu machen, indem die Gewichtungsfaktoren der Schutzkriterien adaptiv angepasst werden. In Abhängigkeit des aktuellen Betriebszustands, der z.B. durch einen Lastfluss, Quellimpedanzen, Schaltstellungen, eine aktuelle Netztopologie und elektrische Zustandsgrößen (Spannung, Strom etc.) beeinflusst wird, wird eine Anpassung der Höhe der Gewichtungsfaktoren vorgenommen.

Bei dem erfindungsgemäßen Verfahren wird zudem in vorteilhafter Weise die Entscheidung über eine Fehlerart nicht lediglich anhand eines einzigen Schutzkriteriums getroffen, sondern unter Verwendung mehrerer Schutzkriterien (mindestens zwei), die je für sich dazu geeignet sind, auf eine Fehlerart in der jeweils ausgewerteten Schleife hinzuweisen. Als unterschiedliche Schutzkriterien werden solche Kriterien angesehen, die dazu geeignet sind, dasselbe Ergebnis mit unterschiedlichen Methoden zu ermitteln. Dabei können die unterschiedlichen Methoden auf der Verwendung unterschiedlicher Messwerte (z.B. Strom, Spannung etc.) und/oder davon abgeleiteter Werte (z.B. Impedanz, Wirkleistung, Blindleistung sowie Effektivwerte, Zeiger, RMS-Werte, Mittelwerte von Strom, Spannung etc.) und/oder auf der Verwendung unterschiedlicher Algorithmen beruhen. Die Auswertung wird für alle möglichen Fehlerschleifen (L1E, L2E, L3E, L12, L23, L31, L123) durchgeführt und das Fehlersignal wird unter Berücksichtigung aller vorliegenden Ergebnisse der geprüften Fehlerkriterien erzeugt. Da die Auswertung unter Verwendung von zumindest zwei Schutzkriterien ausgeführt wird und die Ergebnisse aller Schutzkriterien berücksichtigt werden, lässt sich im Vergleich zur Prüfung nur eines einzigen Kriteriums ein Ergebnis mit signifikant höherer Zuverlässigkeit ermitteln; wenn nämlich eines der Schutzkriterien keine eindeutige Aussage treffen kann, besteht die Möglichkeit, dass diese Unsicherheit durch ein weiteres Schutzkriterium, das sich bei seiner Prüfung z.B. anderer Messwerte bedient, kompensiert werden kann.

Durch Verwendung der Gewichtungsfaktoren kann vorteilhaft eine Priorisierung der einzelnen verwendeten Schutzkriterien vorgenommen werden. Es kann nämlich sein, dass ein bestimmtes Schutzkriterium in den meisten Fehlerfällen mit vergleichsweise hoher Zuverlässigkeit die richtige Fehlerart bestimmt, während ein anderes Schutzkriterium nur in bestimmten Grenzfällen ein deutliches Ergebnis liefert. Mit dem erfindungsgemäßen Verfahren kann eine entsprechende Übergewichtung des ersten Schutzkriteriums vorgenommen werden, um die Entscheidung über die Fehlerart vorrangig von diesem Schutzkriterium abhängen zu lassen. Dadurch dass schließlich das Gesamtergebnis für jede mögliche Schleife durch geeignete Verknüpfung, z.B. durch Addition, aus allen gewichteten Ergebnissen zusammengesetzt wird, lässt sich erreichen, dass pro Schleife nur ein Ergebnis (das Gesamtergebnis) vorliegt und dass dieses Ergebnis - ggf. mit entsprechender Gewichtung - alle Schutzkriterien berücksichtigt, die für die Schleife angewendet worden sind.

Aufgrund der Anpassung der Gewichtungsfaktoren an den jeweils aktuellen Betriebszustand des Energieversorgungsnetzes kann das erfindungsgemäße Verfahren außerdem auch sehr flexibel an unterschiedliche Netzsituationen angepasst werden.

Bei dem Verfahren wird zudem sichergestellt, dass das Fehlersignal alle Gesamtergebnisse der einzelnen möglichen Schleifen berücksichtigt und nicht aufgrund des Ergebnisses nur einer Schleife oder nur weniger Schleifen die Fehlerart bestimmt wird. Dadurch dass die einzelnen Gesamtergebnisse wiederum unter Berücksichtigung aller für die betreffende Schleife ausgewerteten Schutzkriterien gebildet werden, kann zudem sichergestellt werden, dass alle einzelnen Schutzkriterien mit ihrer jeweiligen Gewichtung in die Bildung des Fehlersignals eingehen. Beispielsweise kann für die Fehlerart "fehlerbehaftete Schleife" bei der Bildung des Fehlersignals diejenige Schleife ausgewählt werden, deren Gesamt-Ergebnis den höchsten Wert besitzt.

Es kann beispielsweise vorgesehen sein, dass das Fehlersignal als Fehlerart die Richtung eines Fehlers angibt. Schutzkriterien, die zur Erkennung der Fehlerart "Fehlerrichtung" geeignet sind, sind beispielsweise die nachfolgend aufgeführten.

- Kurzschlussgetreue aktuelle Spannung: Dieses Schutzkriterium bestimmt das Verhältnis zwischen dem aktuellen Spannungszeiger und dem aktuellen Stromzeiger. Die berechnete Impedanz gibt Aufschluss über die Fehlerrichtung.

- Speicherspannung: Dieses Schutzkriterium bestimmt das Verhältnis zwischen dem gespeicherten Spannungszeiger und dem aktuellen Stromzeiger. Dabei wird der an die aktuelle Phasenlage angepasste Spannungszeiger verwendet. Die berechnete Impedanz gibt Aufschluss über die Fehlerrichtung. Sie wird bevorzugt bei serienkompensierten Netzen angewendet.

- Kurzschlussfremde aktuelle Spannung: Dieses Schutzkriterium bestimmt das Verhältnis zwischen dem um 90° gedrehten aktuellen fehlerfremden Spannungszeiger und dem aktuellen Stromzeiger. Die berechnete Impedanz gibt Aufschluss über die Fehlerrichtung. Das Verfahren funktioniert bei allen Fehlerarten außer dem 3-poligen Fehler.

- Kurzschlussfremde gespeicherte Spannung: Dieses Schutzkriterium bestimmt das Verhältnis zwischen dem um 90° gedrehten gespeicherten fehlerfremden Spannungszeiger und dem aktuellen Stromzeiger. Die berechnete Impedanz gibt Aufschluss über die Fehlerrichtung. Das Verfahren funktioniert bei allen Fehlerarten außer dem 3-poligen Fehler.

- Deltagrößenkriterium: Die Richtungsbestimmung mit Deltagrößen arbeitet mit statischen oder dynamischen Deltagrößen. Bei der Richtungsbestimmung mit statischen Deltagrößen werden die Deltazeiger von Strom und Spannung verwendet. Die Deltazeiger von Strom und Spannung berechnen sich aus der Differenz zwischen dem aktuellen gemessenen Zeiger und dem vor Fehlerbeginn gespeicherten Zeiger. Das Verhältnis zwischen dem Deltaspannungszeiger und dem Deltastromzeiger gibt Aufschluss über die Fehlerrichtung. Bei der Richtungsbestimmung mit dynamischen Deltagrößenwerden die Delta-Abtastwerte von Strom und Spannung verwendet. Die Delta-Abtastwerte von Strom und Spannung berechnen sich aus der Differenz zwischen dem aktuellen gemessenen Abtastwert und dem vor einer Netzperiode erfassten Abtastwert. Das Produkt aus Deltastrom und Deltaspannung wird integriert. Das Ergebnis der Integration gibt Aufschluss über die Fehlerrichtung.

- Symmetrische Komponenten-Kriterium: Die Richtungsbestimmung basiert auf den symmetrischen Komponenten. Bei der Richtungsbestimmung mit Nullsystemgrößen wird die Nullsystemimpedanz aus den Spannungs- und Stromzeigern des Nullsystems bestimmt. Die berechnete Impedanz gibt Aufschluss über die Fehlerrichtung. Das Verfahren funktioniert nur bei Fehlern mit Erdbeteiligung. Bei der Richtungsbestimmung mit Gegensystemgrößen wird die Gegensystemimpedanz aus den Spannungs- und Stromzeigern des Gegensystems bestimmt. Die berechnete Impedanz gibt Aufschluss über die Fehlerrichtung. Sie wird bevorzugt bei Kurzschlüssen während Netzpendelungen angewendet. Sie funktioniert nur bei unsymmetrischen Kurzschlüssen.

- Delta-Mitsystemgrößen-Kriterium: Bei der Richtungsbestimmung mit Delta-Mitsystemgrößen wird das Verhältnis zwischen dem Delta-Spannungszeiger und dem Delta-Stromzeiger des Mitsystems bestimmt. Die berechnete Impedanz gibt Aufschluss über die Fehlerrichtung.

Die Richtung des Fehlers kann hierbei als "vorwärts", "rückwärts" oder "ungerichtet", jeweils von der Messstelle aus gesehen, angegeben werden. Eine ungerichtete Richtung erlaubt keine konkrete Festlegung auf einen Vorwärts- oder Rückwärtsfehler.

Außerdem kann auch vorgesehen sein, dass das Fehlersignal als Fehlerart die fehlerbehaftete Schleife angibt. Schutzkriterien, die zur Erkennung der Fehlerart "fehlerbehaftete Schleife" geeignet sind, sind beispielsweise die nachfolgend aufgeführten.

- Stromhöhenkriterium: Dieses Schutzkriterium basiert auf der Annahme, dass bei einem Fehler der Strom in den fehlerbehafteten Schleifen ansteigt. Dabei gibt z.B. das Verhältnis aus Stromeffektivwert und Nennstrom Aufschluss über die fehlerbehaftete Schleife.

- Spannungshöhenkriterium: Dieses Schutzkriterium basiert auf der Annahme, dass bei einem Fehler die Spannung in den fehlerbehafteten Schleifen einbricht. Dabei gibt z.B. das Verhältnis aus Spannungseffektivwert und Nennspannung Aufschluss über die fehlerbehaftete Schleife.

- Delta-Stromhöhenkriterium: Bei diesem Schutzkriterium werden die sogenannten "Deltagrößen" der Ströme herangezogen. Große Deltagrößen weisen auf signifikante Sprünge im Stromverlauf für die betrachtete Schleife und damit auf einen möglichen Fehler hin. Folgende Deltagrößen können z.B. gebildet werden: Differenz aus dem aktuellen Effektivwert des Stroms und einem gespeicherten zeitlich (z.B. eine Periode) vorangehenden Effektivwert des Stroms; Differenz aus dem aktuellen Momentanwert des Stroms und dem eine Nominalperiode zurückliegenden gespeicherten Momentanwert des Stroms; Differenz aus momentanen Zeigerwerten des Stroms und einem gespeicherten Zeigerwert des Stroms. Die Höhe der jeweils berechneten

Deltagrößen gibt Aufschluss über die fehlerbehaftete Schleife.

- Delta-Spannungshöhenkriterium: Bei diesem Schutzkriterium werden die Deltagrößen der Spannungen herangezogen. Große Deltagrößen weisen auf signifikante Sprünge im Spannungsverlauf für die betrachtete Schleife und damit auf einen möglichen Fehler hin. Folgende Deltagrößen können z.B. gebildet werden: Differenz aus dem aktuellen Effektivwert der Spannung und einem gespeicherten zeitlich (z.B. eine Periode) vorangehenden Effektivwert der Spannung; Differenz aus dem aktuellen Momentanwert der Spannung und dem eine Nominalperiode zurückliegenden gespeicherten Momentanwert der Spannung; Differenz aus momentanen Zeigerwerten der Spannung und einem gespeicherten Zeigerwert der Spannung. Die Höhe der berechneten Deltagrößen gibt Aufschluss über die fehlerbehaftete Schleife.

- Impedanzkriterium: Dieses Schutzkriterium berechnet Impedanzen für alle Fehlerschleifen. Dabei gibt das Verhältnis aus dem niedrigsten Impedanzwert und der jeweils berechneten Schleifenimpedanz Aufschluss über die fehlerbehaftete Schleife.

- Symmetrische Komponenten-Kriterium: Dieses Schutzkriterium basiert auf den symmetrischen Komponenten. Das Verhältnis zwischen Null-, Gegen- und Mitsystemzeiger von Strom oder Spannung gibt Aufschluss über die fehlerbehaftete Schleife.

- Sprungerkennung: Dieses Schutzkriterium ist ein logisches Kriterium, das Strom- und Spannungssprünge als Eingangsgrößen hat. Anhand einer logischen Verknüpfung der vorhandenen Strom- und Spannungssprünge wird auf die fehlerbehaftete Schleife geschlossen.

Im Fall der Fehlerart "fehlerbehaftete Schleife" ergibt die Auswertung der Schutzkriterien für eine bestimmte Schleife - ggf. durch zusätzlichen Vergleich mit den Auswertungen der übrigen Schleifen - direkt die Fehlerart, nämlich eine Entscheidung darüber, ob die betreffende Schleife von einem Fehler betroffen ist oder nicht. Eine zusätzliche Unterteilung der Fehlerart wie bei der Fehlerrichtung ist hier nicht erforderlich.

Das Fehlersignal kann beispielsweise dazu verwendet werden, für eine bestimmte Schleife einen selektiven Schaltvorgang auszulösen, um einen für diese Schleife erkannten Fehler abzuschalten.

Erfindungsgemäß ist vorgesehen, dass die Schaltstellung der zumindest einen Schalteinrichtung und/oder die Messwerte der zumindest einen elektrischen Messgröße von einer der Schutzeinrichtung übergeordneten Leitstelleneinrichtung erfasst werden, und der aktuelle Betriebszustand von der Leitstelleneinrichtung ermittelt wird.

Dies bietet insbesondere denjenigen Vorteil, dass neben lokalen Betriebszustands-Parametern auch solche zur Ermittlung der Gewichtsfaktoren herangezogen werden können, die an anderen Stellen des Energieversorgungsnetzes erfasst worden sind. Gemäß dieser Ausführungsform wird eine Leitstelleneinrichtung, z.B. eine Leitwarte oder eine Stationsleiteinrichtung verwendet, die anhand des aktuellen Betriebszustands die gesuchten Gewichtungsfaktoren ermittelt. Der aktuelle Betriebszustand wird hierbei aus Schaltstellungen und/oder Messwerten abgeleitet, die über mehrere Stellen des Energieversorgungsnetzes verteilt ermittelt worden sind.

Außerdem ist vorgesehen, dass zur Bestimmung der Höhe der jeweiligen Gewichtungsfaktoren von der Leitstelleneinrichtung unter Verwendung eines zumindest einen Teil des Energieversorgungsnetzes beschreibenden mathematischen Modells und dem aktuellen Betriebszustand des Energieversorgungsnetzes eine Simulation zumindest eines Fehlers in dem Energieversorgungsnetz durchgeführt wird, wobei ein solcher Fehler simuliert wird, der im Energieversorgungsnetz zu einer Abgabe des Fehlersignals durch die Schutzeinrichtung führen soll.

Hierdurch kann eine besonders genaue Anpassung der Gewichtungsfaktoren an den aktuellen Betriebszustand erreicht werden, denn es wird anhand eines mathematischen Netzmodells für die den aktuellen Betriebszustand beschreibenden Parameter (insbesondere Schaltstellungen, elektrische Messgrößen) eine Simulation von Fehlerzuständen, z.B. Kurzschlüssen, durchgeführt, die auf das Verhalten des realen Energieversorgungsnetzes im Fehlerfall schließen lassen.

Weiterhin ist vorgesehen, dass zur Bestimmung der Höhe der jeweiligen Gewichtungsfaktoren die Reaktion der zumindest zwei Schutzkriterien auf den simulierten Fehler betrachtet wird und die Gewichtungsfaktoren in der Weise festgelegt werden, dass ein solches Schutzkriterium, das den simulierten Fehler korrekt erkannt hat, gegenüber einem solchen Schutzkriterium, das den simulierten Fehler nicht korrekt erkannt hat, verstärkt in die Bildung des Gesamtergebnisses eingeht.

Hierdurch wird erreicht, dass die in dem jeweiligen aktuellen Betriebszustand des Energieversorgungsnetzes besonders aussagekräftigen Schutzkriterien einen größeren Einfluss auf das Gesamtergebnis haben. Andererseits kann der Einfluss solcher Schutzkriterien, die in dem jeweiligen aktuellen Betriebszustand schlechte Ergebnisse liefern, durch eine Verringerung ihres jeweiligen Gewichtungsfaktors relativiert werden. Die Ermittlung der Gewichtungsfaktoren kann beispielsweise durch ein geeignetes Optimierungsverfahren durchgeführt werden.

Gemäß einer vorteilhaften Weiterbildung des erfindungsgemäßen Verfahrens kann vorgesehen sein, dass zur Ermittlung des aktuellen Betriebszustands von der Leitstelleneinrichtung Schaltstellungen einer Mehrzahl von Schalteinrichtungen und/oder an zumindest zwei unterschiedlichen Messstellen erfasste Messwerte der zumindest einen elektrischen Messgröße herangezogen werden.

Auf diese Weise können über das Energieversorgungsnetz verteilt erfasste den Betriebszustand kennzeichnende Parameter zur Ermittlung der Gewichtungsfaktoren herangezogen werden.

In diesem Zusammenhang kann konkret vorgesehen sein, dass die Leitstelleneinrichtung Schaltstellungen und/oder Messwerte von mehreren Mess- oder Schutzeinrichtungen des Energieversorgungsnetzes empfängt und den aktuellen Betriebszustand des Energieversorgungsnetzes unter Verwendung der empfangenen Schaltstellungen und/oder Messwerte ermittelt.

In dieser Ausführungsform werden vorteilhaft im Energieversorgungsnetz angeordnete Mess- oder Schutzeinrichtungen zur prozessnahen Erfassung der Schaltstellungen und/oder der Messwerte eingesetzt. Solche Mess- oder Schutzeinrichtungen sind zur Automatisierung des Energieversorgungsnetzes üblicherweise ohnehin vorhanden und mit entsprechend ausgebildeten Sensoren verbunden, die die benötigten Schaltstellungen bzw. Messwerte liefern. Es besteht hierbei die Möglichkeit, dass auch solche Schutzeinrichtungen, die die angepassten Gewichtungsfaktoren zur Ermittlung der Fehlerart verwenden, zur Erfassung der Schaltstellungen bzw. Messwerte eingesetzt werden.

Eine weitere vorteilhafte Ausführungsform des erfindungsgemäßen Verfahrens sieht vor, dass die von der Leitstelleneinrichtung bestimmten Gewichtungsfaktoren an die Schutzeinrichtung übertragen und von der Schutzeinrichtung zur Bildung des Fehlersignals verwendet werden.

Auf diese Weise kann die vergleichsweise aufwendige Ermittlung der Gewichtungsfaktoren in der Leitstelleneinrichtung durchgeführt werden, während die Schutzeinrichtung die berechneten Gewichtungsfaktoren empfängt und für ihren Betrieb einsetzt. Diese Ausführungsform eignet sich insbesondere auch in Fällen, in denen mehrere Schutzeinrichtungen vorgesehen sind, die mit den angepassten Gewichtungsfaktoren arbeiten.

Gemäß einer weiteren Ausführungsform des erfindungsgemäßen Verfahrens ist vorgesehen, dass eine Anpassung der Gewichtungsfaktoren durch die Leitstelleneinrichtung und/oder die Schutzeinrichtung veranlasst wird.

Auf diese Weise kann sowohl von der Leitstelleneinrichtung selbst als auch von einer Schutzeinrichtung die Anpassung der Gewichtungsfaktoren ausgelöst werden. Beispielsweise kann eine solche Veranlassung dann ausgelöst werden, wenn sich den Betriebszustand des Energieversorgungsnetzes beeinflussende Parameter geändert haben, z.B. wenn ein Schalter eine andere Schaltstellung angenommen hat und/oder sich die Lastverhältnisse im Energieversorgungsnetz geändert haben. Eine solche Veränderung wesentlicher Parameter kann von der Leitstelleneinrichtung und/oder von der Schutzeinrichtung erkannt werden, so dass eine Anpassung der Gewichtungsfaktoren ausgelöst werden kann, um an den geänderten Betriebszustand angepasste Gewichtungsfaktoren zu ermitteln und eine zuverlässige Erkennung der Fehlerart auch unter den geänderten Bedingungen zu gewährleisten.

Eine weitere vorteilhafte Ausführungsform des erfindungsgemäßen Verfahrens sieht vor, dass die Schutzkriterien parallel zueinander ausgewertet werden.

Eine "parallele" Auswertung kann in diesem Fall beispielsweise eine gleichzeitig auf unterschiedlichen Prozessoren oder Prozessorkernen (physikalisch und/oder virtuell) oder in einem Rechenbaustein mit hardwarebestimmter Programmierung (z.B. ASIC, FPGA) ablaufende Ausführung der Schutzkriterien bedeuten. Als parallele Auswertung wird jedoch auch eine sequentiell ablaufende Ausführung der Schutzkriterien (z.B. auf einem oder mehreren Prozessoren oder Prozessorkernen) angesehen, sofern die Ergebnisse aller Schutzkriterien parallel in die endgültige Auswertung einfließen (im Gegensatz beispielsweise zu einer sequentiellen Abarbeitung, bei der ein Ergebnis eines zuerst ausgeführten Schutzkriteriums in die Ausführung des nächsten Schutzkriteriums eingeht).

Durch diese Ausführungsform kann erreicht werden, dass tatsächlich alle Schutzkriterien in die Erzeugung des Fehlersignals einfließen, so dass die Zuverlässigkeit bei der Erzeugung des Fehlersignals noch weiter erhöht wird.

Gemäß einer weiteren vorteilhaften Ausführungsform des erfindungsgemäßen Verfahrens kann zudem vorgesehen sein, dass für jede mögliche Schleife die Gewichtungsfaktoren für alle ausgewerteten Schutzkriterien so gewählt werden, dass ihre Summe 1 ergibt.

Eine weitere vorteilhafte Ausführungsform des erfindungsgemäßen Verfahrens sieht außerdem vor, dass das Fehlersignal nur dann erzeugt wird, wenn das Gesamtergebnis zumindest einer möglichen Schleife einen Fehlererkennungs-Schwellenwert überschreitet.

Hierdurch wird die Gefahr von Fehlauslösungen signifikant gesenkt, das nicht jede Erhöhung eines Gesamtergebnisses für eine Schleife sofort zu einer Erzeugung des Fehlersignals führt. Erst wenn die Erhöhung des Gesamtergebnisses zumindest einer Schleife derart signifikant ist, dass ein Fehler angenommen werden muss, wird das Fehlersignal erzeugt. Der Fehlererkennungs-Schwellenwert kann hierbei einen fest vorgegebenen Wert besitzen. Alternativ kann der Fehlererkennungs-Schellenwert aber auch dynamisch gebildet werden und beispielsweise relativ im Vergleich zu den Gesamtergebnissen aller Schleifen ermittelt werden oder einen Abstand des Gesamtergebnisses einer Schleife von den Gesamtergebnissen anderer Schleifen berücksichtigen.

Schließlich kann gemäß einer weiteren vorteilhaften Ausführungsform des erfindungsgemäßen Verfahrens vorgesehen sein, dass das jeweilige Ergebnis der Auswertung des jeweiligen Schutzkriteriums in Form eines schutzkriterienspezifischen Wahrscheinlichkeitswerts gebildet wird, der angibt, mit welcher Wahrscheinlichkeit gemäß dem ausgewerteten Schutzkriterium ein Fehler mit der Fehlerart vorliegt, und das jeweilige Gesamtergebnis in Form eines schleifenspezifischen Wahrscheinlichkeitswerts gebildet wird, der angibt, mit welcher Wahrscheinlichkeit in der betrachteten Schleife ein Fehler mit der Fehlerart vorliegt.

Diese Ausführungsform besitzt den Vorteil, dass alle Gesamtergebnisse aller Schleifen miteinander vergleichbar sind. Ein Wahrscheinlichkeitswert wird nämlich immer einen Wert zwischen 0...1 annehmen, so dass auch das Gesamtergebnis, das die gewichteten schutzkriterienspezifischen Wahrscheinlichkeitswerte berücksichtigt, selbst als Wahrscheinlichkeitswert angebbar ist. Dadurch dass Wahrscheinlichkeitswerte verwendet werden, kann zudem auch eine noch bessere Einbeziehung aller Ergebnisse der einzelnen Schutzkriterien in das Gesamtergebnis erfolgen, ein Schutzkriterium gibt nämlich nicht nur binär an, ob eine bestimmte Fehlerart vorliegt oder nicht, sondern mit welcher Wahrscheinlichkeit diese Fehlerart aktuell vorliegt. Durch die Zusammenfassung aller schutzkriterienspezifischen Wahrscheinlichkeitswerte lässt sich der schleifenspezifische Wahrscheinlichkeitswert mit einer höheren Transparenz bilden als bei einer rein binären Betrachtung. Beispielsweise kann vorgesehen sein, dass das Fehlersignal durch Vergleich aller schleifenspezifischen Wahrscheinlichkeitswerte diejenige Schleife ermittelt, deren schleifenspezifischer Wahrscheinlichkeitswert am höchsten ist, und daraufhin die entsprechende Fehlerart für diese Schleife auswählt.

Die oben genannte Aufgabe wird auch durch ein System zum Erzeugen eines eine Fehlerart eines Fehlers in einem mehrphasigen elektrischen Energieversorgungsnetz angebenden Fehlersignals gelöst. Das System umfasst eine einerseits Schutzeinrichtung mit einer Messwerterfassungseinrichtung zum Erfassen von an mindestens einer Messstelle in dem Energieversorgungsnetz aufgenommenen Messwerten und mit einer Auswerteinrichtung sowie andererseits eine der Schutzeinrichtung übergeordnete Leitstelleneinrichtung.

Erfindungsgemäß ist das System dazu eingerichtet, ein Verfahren gemäß einem der Ansprüche 1 bis 9 auszuführen.

Das erfindungsgemäße System ist somit dazu ausgebildet, die Ermittlung angepasster Gewichtungsfaktoren in der Leitstelleneinrichtung durchzuführen. Auf diese Weise können rechenintensive Vorgänge in der Leitstelleneinrichtung ausgeführt werden. Auch können optional Schaltstellungen und/oder Messwerte von mehreren Messstellen aus dem Energieversorgungsnetz zur Ermittlung des aktuellen Betriebszustands zusammengeführt werden. Außerdem ist es möglich, die Ermittlung der Gewichtungsfaktoren für mehrere Schutzeinrichtungen durchzuführen.

Hinsichtlich des erfindungsgemäßen Systems gelten alle zu dem erfindungsgemäßen Verfahren voranstehend und nachfolgend gemachten Ausführungen und umgekehrt in entsprechender Weise, insbesondere ist das erfindungsgemäße System zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Systems wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Schutzeinrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Es zeigen

Figur 1    eine schematische Ansicht eines von einer Schutzeinrichtung überwachten Teils eines elektrischen Energieversorgungsnetzes;

Figur 2    ein schematisches Ablaufblockschaltbild zur Erläuterung eines Verfahrens zum Erzeugen eines die Fehlerart eines Fehlers angebenden Fehlersignals;

Figuren 3-5    Messwertverläufe und Diagramme zur Erläuterung der Erzeugung eines Fehlersignals für die Fehlerart "fehlerbehaftete Schleife";

Figur 6    ein Diagramm zur Erläuterung der Verwendung von Gewichtungsfaktoren;

Figur 7    eine schematische Ansicht eines Teils eines Energieversorgungsnetzes zur Erläuterung der Diagramme zur Erläuterung der Verwendung von adaptiv eingestellten Gewichtungsfaktoren;

Figur 8    ein Diagramm zur Erläuterung der Verwendung von unterschiedlichen Sätzen von Gewichtungsfaktoren; und

Figur 9    ein schematisches Ablaufschema zur Erläuterung der Vorgehensweise zur Ermittlung von adaptiv eingestellten Gewichtungsfaktoren.

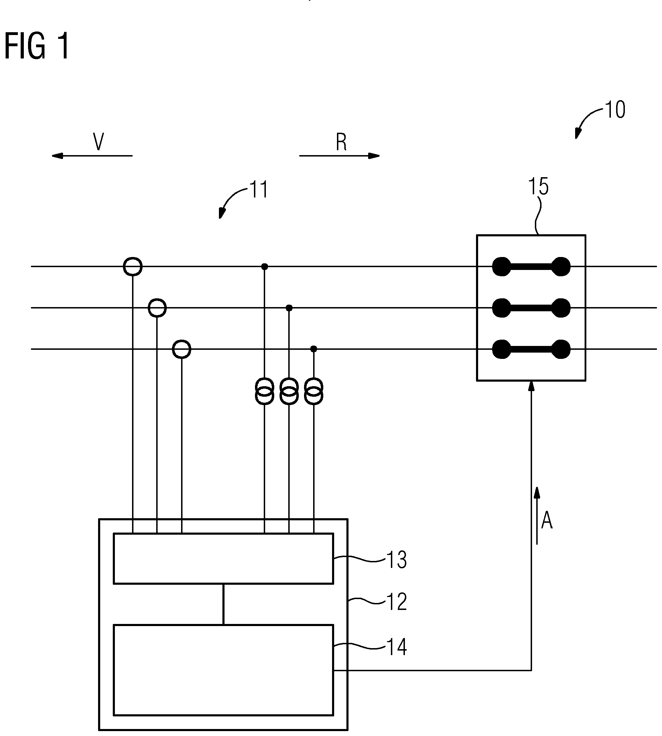

Figur 1 zeigt in schematischer Ansicht einen Netzteil eines ansonsten nicht näher dargestellten elektrischen Energieversorgungsnetzes. Bei dem dargestellten Netzteil 10 handelt es sich beispielhaft um eine Energieversorgungsleitung, die z.B. als Freileitung oder als Erdkabel ausgeführt sein kann. An einer Messstelle 11 werden mittels nur schematisch angedeuteter Messwandler Messwerte, die den Zustand des Energieversorgungsnetzes an der Messstelle 11 angeben, erfasst. Bei den Messwerten kann es sich z.B. um elektrische Ströme und/oder Spannungen handeln. Die erfassten Messwerte werden einer Schutzeinrichtung 12 zugeführt, bei der es sich z.B. um ein Distanzschutzgerät handeln kann, und dort mittels einer Messwerterfassungseinrichtung 13 erfasst. In der Messwerterfassungseinrichtung findet eine Vorverarbeitung, z.B. A/D-Wandlung, Filterung, Berechnung von abgeleiteten Werten (Mittelwerten, RMS-Werten, Effektivwerten, Zeigerwerten, symmetrischen Komponenten, Impedanzen, Leistungen etc.), statt. Die vorverarbeiteten Messwerte und ggf. die abgeleiteten Werte werden an eine Auswerteinrichtung 14 übergeben, die hinsichtlich der übergebenen Messwerte und abgeleiteten Werte eine Auswertung auf möglicherweise in einer Schutzzone der Schutzeinrichtung 12 vorliegende Fehler durchführt. Dabei kann beispielsweise ein an sich bekannter Distanzschutzalgorithmus durchgeführt werden, mit dem unter Verwendung von aus Stromzeigern und Spannungszeigern berechneter komplexer Impedanzwerte auf das Vorliegen von Fehlern geschlossen wird. Dabei ist einerseits zu bestimmen, ob der Fehler innerhalb oder außerhalb einer überwachten Schutzzone der Schutzeinrichtung liegt. Nur bei innerhalb der Schutzzone liegenden Fehlern ist die Schutzeinrichtung selbst vorrangig für die Fehlerklärung verantwortlich. Die Entscheidung darüber, ob der Fehler innerhalb der Schutzzone vorliegt, wird bei einem Distanzschutzgerät üblicherweise anhand der Lage des Impedanzwertes in der komplexen Impedanzebene getroffen. Andererseits sind Fehlerarten des Fehlers, insbesondere die Richtung (Vorwärtsrichtung V; Rückwärtsrichtung R), in der der Fehler von der Messstelle aus gesehen liegt, und die von dem Fehler betroffene Schleife (L1E, L2E, L3E, L12, L23, L34, L123) zu ermitteln. Wenn die Schutzeinrichtung 12 anhand aller benötigten Informationen einen innerhalb der Schutzzone liegenden Fehler in Vorwärtsrichtung und in einer bestimmten Schleife feststellt, so kann sie mittels eines Auslösesignals A einen Leistungsschalter 15 zum selektiven Öffnen derjenigen Schaltkontakte veranlassen, die die fehlerbehafteten Leiter vom übrigen Energieversorgungsnetz abtrennen.

Die Messwerterfassungseinrichtung 13 und die Auswerteinrichtung 14 müssen nicht als getrennte Einrichtungen ausgeführt sein, sondern können auch eine integrierte Einrichtung bilden. Die Funktionen der Messwerterfassungseinrichtung 13 und der Auswerteinrichtung 14 können durch hardwarebestimmte Programmierung (z.B. ASIC, FPGA), durch softwarebestimmte Programmierung eines Prozessors (z.B. Mikroprozessor, CPU, Digitaler Signal Prozessor (DSP)) oder einer Kombination daraus festgelegt werden.

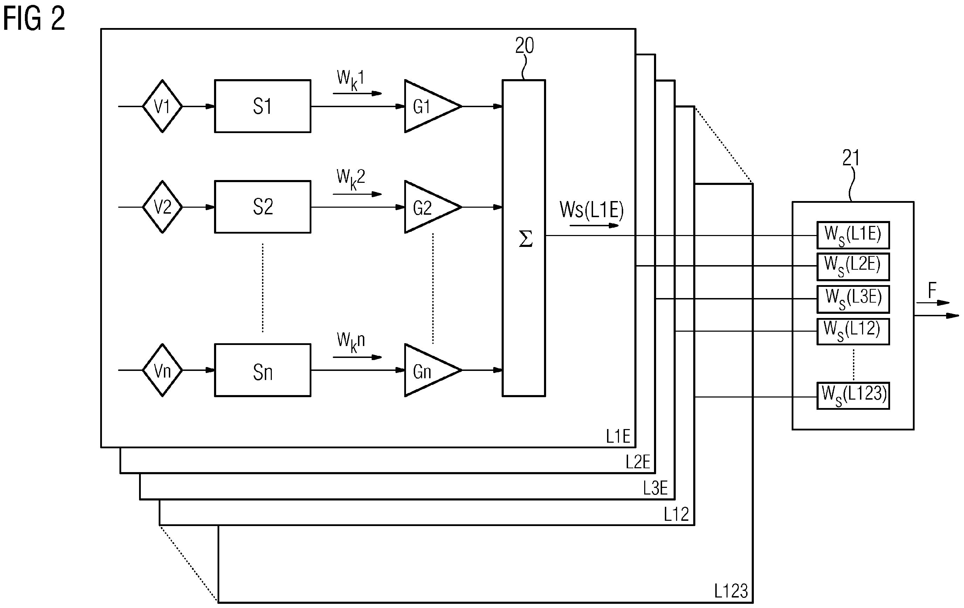

Figur 2 zeigt beispielhaft in Form eines Blockschaltbildes eine von der Auswerteinrichtung 14 ausgeführte Funktion zur Ermittlung der Fehlerart eines Fehlers und zur Erzeugung eines die ermittelte Fehlerart angebenden Fehlersignals F. Die Erkennung der Fehlerart wird für alle möglichen Schleifen, in denen ein Fehler auftreten kann, also L1E, L2E, L3E, L12, L23, L31, L123, durchgeführt. Nachfolgende Erläuterungen beziehen sich zunächst auf die mögliche Schleife L1E.

Zur Ermittlung der Fehlerart eines Fehlers werden gemäß dem in Figur 2 gezeigten Blockschaltbild mehrere unterschiedliche Schutzkriterien S1, S2, ... Sn parallel zueinander ausgewertet. Auf Beispiele von einzelnen Schutzkriterien wird an späterer eingegangen. Jedes Schutzkriterium ist für sich selbständig dazu geeignet, eine Aussage über die Fehlerart eines vorliegenden Fehlers zu treffen, verwendet dazu aber unterschiedliche Eingangsgrößen (Messwerte bzw. abgeleitete Werte) und / oder Algorithmen. Die Ergebnisse der Auswertungen der unterschiedlichen Schutzkriterien Sl...Sn werden in Form von schutzkriterienspezifischen Wahrscheinlichkeitswerten $W_k1...W_kn$ ausgegeben, die jeweils angeben, mit welcher Wahrscheinlichkeit gemäß dem ausgewerteten Schutzkriterium die Fehlerart vorliegt. Daraufhin findet eine Multiplikation der schutzkriterienspezifischen Wahrscheinlichkeitswerte mit geeigneten Gewichtungsfaktoren Gl...Gn statt, um eine Priorisierung der einzelnen Schutzkriterien Sl...Sn vorzunehmen. Auf diese Weise kann den Ergebnissen einzelner ausgewählter Schutzkriterien gezielt ein stärkeres Gewicht verliehen werden als den Ergebnissen anderer Schutzkriterien. Generell bietet es sich an, die Gewichtungsfaktoren so zu wählen, dass ihre Summe 1 ergibt; eine Auswahl anderer Gewichtungsfaktoren Gl...Gn ist jedoch auch möglich.

Die gewichteten schutzkriterienspezifischen Wahrscheinlichkeitswerte $W_k1...W_kn$ werden daraufhin einem Summationsblock 20 zugeführt, der die Summe der einzelnen schutzkriterienspezifischen Wahrscheinlichkeitswerte $W_k1...W_kn$ unter Bildung eines Gesamt-Ergebnisses in Form eines schleifenspezifischen Wahrscheinlichkeitswertes $W_s(L1E)$ bestimmt, der angibt, mit welcher Wahrscheinlichkeit für die betrachtete Schleife die Fehlerart vorliegt.

Die beispielhaft für die Schleife L1E erläuterte Vorgehensweise findet auch für alle anderen möglichen Schleifen, in denen ein Fehler auftreten kann, also auch für die Schleifen L2E, L3E, L12, L23, L31, L123 statt, wie in Figur 2 durch mehrere Ebenen des Ablaufblockschaltbildes angedeutet wird. Für jede Schleife wird in der beschriebenen Weise ein schleifenspezifischer Wahrscheinlichkeitswert $W_s(L1E)...W_s(L123)$ ermittelt und ausgegeben.

In einem nachfolgenden Kombinationsblock 21 werden die jeweiligen schleifenspezifischen Wahrscheinlichkeitswerte gesammelt und ausgewertet. Unter Berücksichtigung aller schleifenspezifischen Wahrscheinlichkeitswerte

$W_s$ (L1E) ...$W_s$ (L123) wird schließlich das die Fehlerart angebende Fehlersignal F gebildet. Das erzeugte Fehlersignal F gibt die unter Berücksichtigung aller schleifenspezifischen Wahrscheinlichkeitswerte (und damit auch unter Berücksichtigung aller schutzkriterienspezifischen Wahrscheinlichkeitswerte aller Schleifen) ermittelte Fehlerart an, damit unter Berücksichtigung dieses Fehlersignals ein etwaiges Auslösesignal A für einen Schalter erzeugt werden kann.

Sofern für die Anwendung eines bestimmten Schutzkriteriums Sl...Sn die notwendigen Messwerte und/oder abgeleiteten Werte nicht vorhanden sind, ist es möglich, das fragliche Schutzkriterium temporär aus der Auswertung herauszunehmen. Fehlende Messwerte und/oder abgeleitete Werte können beispielsweise durch (noch) nicht vorliegende abgespeicherte Werte oder durch fehlerhafte Messwerterfassung oder generell fehlende Messkanäle hervorgerufen werden. Die diesbezügliche Prüfung findet in den Schutzkriterien Sl...Sn vorgelagerten Vorbedingungsprüfungs-Blöcken V1...Vn statt. Sofern in einem solchen Vorbedingungsprüfungs-Block Vl...Vn festgestellt wird, dass die notwendigen Messwerte und/oder abgeleiteten Werte zur Ausführung des Schutzkriteriums nicht vorliegen, wird dieses vorübergehend deaktiviert, bis die notwendigen Messwerte und/oder abgeleiteten Werte wieder vorliegen. Außerdem können die Gewichtungsfaktoren Gl...Gn der tatsächlich verwendeten Schutzkriterien derart angepasst werden, dass ihre Summe auch ohne Berücksichtigung des Gewichtungsfaktors des deaktivierten Schutzkriteriums wieder 1 ergibt. Durch eine solche Anpassung der Gewichtungsfaktoren wird erreicht, dass ein deaktiviertes Kriterium das Gesamtergebnis nicht beeinflusst.

Nachfolgend wird die in Figur 2 dargestellte Vorgehensweise am Beispiel der Fehlerart "fehlerbehaftete Schleife" näher erläutert. In diesem Fall sind die einzelnen Schutzkriterien Sl...Sn jeweils für sich dazu geeignet, festzustellen, ob die betrachtete Schleife von einem Fehler betroffen ist. Zunächst wird dabei die Vorgehensweise für die mögliche Schleife S1 dargestellt.

Beispielsweise kann das erste Schutzkriterium S1 ein Stromhöhenkriterium sein und die Höhe des aktuell gemessenen Stroms I (als auf den Nennstrom $I_N$ bezogener Effektivwert) betrachten. Ein hoher Strom deutet auf einen die geprüfte Schleife betreffenden Fehler hin. Gemäß dem ersten Schutzkriterium S1 kann z.B. aus der Höhe des Stroms $I/I_N$ die Höhe eines schutzkriterienspezifischen Wahrscheinlichkeitswertes $W_k1$ ermittelt werden. Dazu kann beispielsweise eine entsprechend ausgebildete Kennlinie eingesetzt werden, bei der mit steigendem Strom $I/I_N$ die Wahrscheinlichkeit, dass die fragliche Schleife an einem Fehler beteiligt ist, ebenfalls ansteigt. Der entsprechend einer solchen Kennlinie ermittelte schutzkriterienspezifische Wahrscheinlichkeitswert $W_k1$ wird vom Block S1 abgegeben, mit dem Gewichtungsfaktor G1 multipliziert und dem Summationsblock 20 zugeführt.

Das zweite Schutzkriterium S2 kann beispielsweise ein Spannungshöhenkriterium sein und die Höhe der aktuell gemessenen Spannung U (als auf die Nennspannung $U_N$ bezogener Effektivwert) betrachten. Eine niedrige Spannung deutet auf einen die geprüfte Schleife betreffenden Fehler hin. Gemäß dem zweiten Schutzkriterium S2 kann z.B. aus der Höhe der Spannung $U/U_N$ die Höhe des schutzkriterienspezifischen Wahrscheinlichkeitswerts $W_k2$ ermittelt werden. Dazu kann beispielsweise eine entsprechend ausgebildete Kennlinie eingesetzt werden, bei der mit abnehmender Spannung $U/U_N$ die Wahrscheinlichkeit, dass die fragliche Schleife an einem Fehler beteiligt ist, ansteigt. Der entsprechend einer solchen Kennlinie ermittelte schutzkriterienspezifische Wahrscheinlichkeitswert $W_k2$ wird vom Block S2 abgegeben, mit dem Gewichtungsfaktor G2 multipliziert und dem Summationsblock 20 zugeführt.

Als ein drittes Schutzkriterium S3 (in Figur 2 nicht dargestellt) kann beispielsweise ein Delta-Spannungshöhenkriterium verwendet werden. Bei diesem dritten Schutzkriterium S3 werden die Deltagrößen der Spannungen herangezogen. Große Deltagrößen weisen auf signifikante Sprünge im Spannungsverlauf für die betrachtete Schleife und damit auf einen möglichen Fehler hin. Die Deltaspannung $\Delta U$ wird hierbei auf die Nennspannung $U_N$ bezogen. Dieses dritte Schutzkriterium S3 kann ebenfalls mit einer Kennlinie arbeiten, bei der aus der Höhe der Deltaspannung $\Delta U/U_N$ die Höhe des schutzkriterienspezifischen Wahrscheinlichkeitswerts $W_k3$ ermittelt wird. Dazu kann beispielsweise eine entsprechend ausgebildete Kennlinie eingesetzt werden, bei der mit steigender Deltaspannung $\Delta U/U_N$ die Wahrscheinlichkeit, dass die fragliche Schleife an einem Fehler beteiligt ist, ansteigt. Der entsprechend einer solchen Kennlinie ermittelte schutzkriterienspezifische Wahrscheinlichkeitswert $W_k3$ wird mit einem Gewichtungsfaktor G3 (in Figur 2 nicht dargestellt) multipliziert und dem Summationsblock 20 zugeführt.

Als Schutzkriterium Sn schließlich kann beispielsweise ein Symmetrische-Komponenten-Kriterium verwendet werden. Dieses Schutzkriterium basiert auf den symmetrischen Komponenten, bei dem das Verhältnis zwischen Null-, Gegen- und Mitsystemzeigern von Strom oder Spannung betrachtet wird. Je nach Lage des Verhältnisses werden Wahrscheinlichkeitswerte von 1 oder null bzw. Zwischenwerte vergeben. Für einige Verhältnisse kann jedoch keine Aussage getroffen werden. Dies zeigt erneut die Wichtigkeit der Tatsache, dass in die Auswertung hinsichtlich der Fehlerart mehrere Schutzkriterien einbezogen werden und die Ergebnisse der Auswertungen von allen Schutzkriterien in bei der Ermittlung der Fehlerart berücksichtigt wird.

Andere mögliche Schutzkriterien können z.B. ein Delta-Stromhöhenkriterium, ein Impedanzkriterium oder ein Sprungerkennungskriterium sein. Auch die Verwendung anderer geeigneter Schutzkriterien ist selbstverständlich möglich, so dass die Schutzeinrichtung durch Auswahl der passenden Schutzkriterien immer an die durch die Topologie und Konfiguration des überwachten Energieversorgungsnetzes vorgegebenen Bedingungen angepasst werden kann.

Die gewichteten schutzkriterienspezifischen Wahrscheinlichkeitswerte $W_k1...W_kn$ werden wie oben bereits erläutert dem Summationsblock 20 zugeführt, der durch Addition den schleifenspezifischen Wahrscheinlichkeitswert $W_s(L1E)$ für die Schleife L1E bildet.

In entsprechender Weise werden für die anderen Schleifen unter Anwendung derselben oder anderer geeigneter Schutzkriterien schleifenspezifische Wahrscheinlichkeitswerte $W_s (L2E)$ ...$W_s(L123)$ gebildet. Alle schleifenspezifischen Wahrscheinlichkeitswerte $W_s (L1E)$...$W_s(L123)$ werden in dem Kombinationsblock 21 ausgewertet und bei der Erzeugung des die Fehlerart "fehlerbehaftete Schleife" angebenden Fehlersignals F berücksichtigt. Hierzu kann der Kombinationsblock beispielsweise diejenige Schleife als von einem Fehler behaftet auswählen, die den größten schleifenspezifischen Wahrscheinlichkeitswert aufweist. Um gegen Fehlauslösungen ausreichende Sicherheit zu bieten, kann zudem vorgesehen sein, dass ein Fehlersignal F nur dann erzeugt wird, wenn der größte schleifenspezifische Wahrscheinlichkeitswert einen Fehlererkennungs-Schwellenwert überschreitet. Dieser Schwellenwert kann entweder fest vorgegeben sein oder an die jeweiligen schleifenspezifische Wahrscheinlichkeitswerte angepasst werden (z.B. relative Höhe eines schleifenspezifischen Wahrscheinlichkeitswertes im Vergleich zu allen anderen schleifenspezifischen Wahrscheinlichkeitswerten, Abstand des größten schleifenspezifischen Wahrscheinlichkeitswertes zum zweitgrößten schleifenspezifischen Wahrscheinlichkeitswert etc.).

Das erzeugte Fehlersignal F gibt die unter Berücksichtigung aller schleifenspezifischen Wahrscheinlichkeitswerte (und damit auch unter Berücksichtigung aller schutzkriterienspezifischen Wahrscheinlichkeitswerte aller Schleifen) ermittelte Fehlerart an. Im Fall der eben erläuterten Fehlerart "fehlerbehaftete Schleife" gibt das Fehlersignal folglich die von dem Fehler betroffene Schleife an, damit unter Berücksichtigung dieses Fehlersignals ein etwaiges Auslösesignal A für einen Schalter erzeugt werden kann.

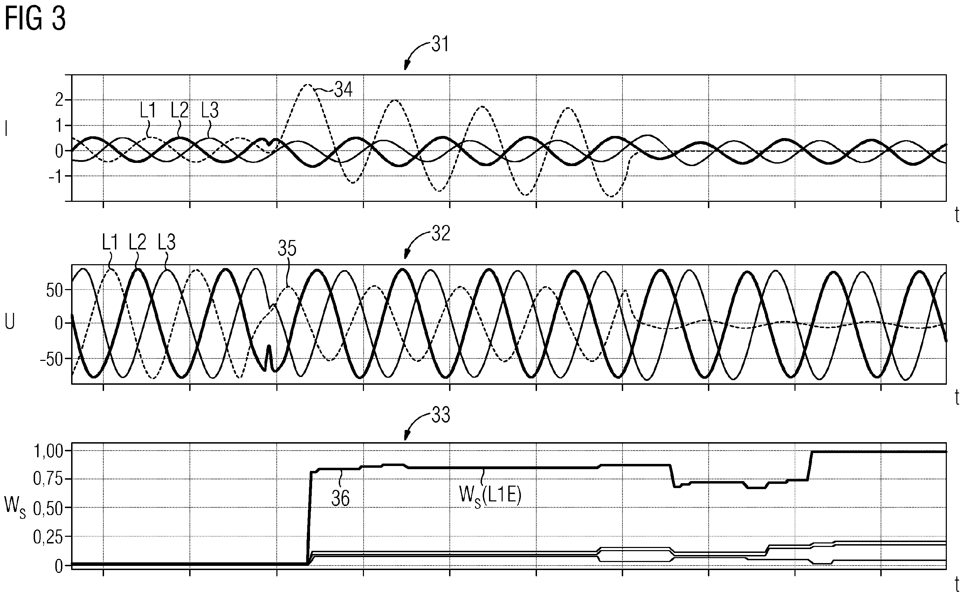

Figuren 3-5 zeigen Diagramme für unterschiedliche Fehlerfälle, bei denen unter Anwendung des oben beschriebenen Verfahrens eine fehlerbehaftete Schleife ermittelt wird.

In Figur 3 sind typische zeitliche Verläufe der Ströme (Diagramm 31) und Spannungen (Diagramm 32) während eines einpoligen Fehlers (L1E) dargestellt. Diagramm 33 zeigt den Verlauf der schleifenspezifischen Wahrscheinlichkeitswerte $W_s$ für alle möglichen Schleifen. Der Strom in der fehlerbehafteten Phase steigt (Stelle 34 in Diagramm 31). Dagegen bricht die Spannung der fehlerbehafteten Phase ein (Stelle 35 in Diagramm 32). Unter Anwendung der verschiedenen Schutzkriterien (z.B. Stromhöhekriterium, Spannungshöhekriterium, Delta-Stromhöhekriterium, Delta-Spannungshöhekriterium, Impedanzkriterium etc.) können schutzkriterienspezifische Wahrscheinlichkeitswerte für die einzelnen möglichen Schleifen bestimmt werden, aus denen wiederum ein jeweiliger schleifenspezifischer Wahrscheinlichkeitswert ermittelt wird. Der Algorithmus zur Erkennung der Fehlerart "fehlerbehaftete Schleife" reagiert schnell und ermittelt unter Berücksichtigung aller schutzkriterienspezifischen Wahrscheinlichkeitswerte in kurzer Zeit die fehlerbehaftete Schleife L1E (Stelle 36 in Diagramm 33), die einen schleifenspezifischen Wahrscheinlichkeitswert von über 85% aufweist. Die anderen Schleifen liegen meist unter 10%.

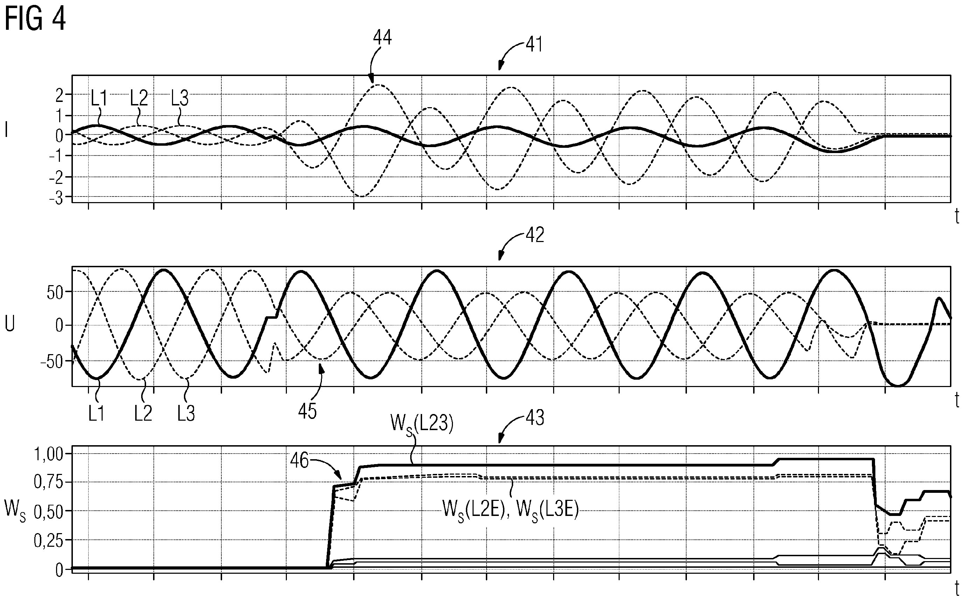

In Figur 4 sind typische zeitliche Verläufe der Ströme (Diagramm 41) und Spannungen (Diagramm 42) während eines zweipoligen Fehlers mit Erdbeteiligung (L23 mit Erdbeteiligung) dargestellt. Diagramm 43 zeigt den Verlauf der schleifenspezifischen Wahrscheinlichkeitswerte $W_s$ für alle möglichen Schleifen. Beim Fehlereintritt steigt der Strom in den betroffenen Phasen (Stelle 44 in Diagramm 41), während die Spannung der betroffenen Phasen absinkt (Stelle 45 in Diagramm 42). Unter Anwendung der verschiedenen Schutzkriterien können schutzkriterienspezifische Wahrscheinlichkeitswerte für die einzelnen möglichen Schleifen bestimmt werden, aus denen wiederum ein jeweiliger schleifenspezifischer Wahrscheinlichkeitswert ermittelt wird. Auch in diesem Fall reagiert der Algorithmus zur Erkennung der Fehlerart "fehlerbehaftete Schleife" schnell und sicher. Es werden drei Schleifen (L23, L2E, L3E) mit schleifenspezifischen Wahrscheinlichkeitswerten über 75% Qualität ermittelt (Stelle 46 in Diagramm 43), was bei dieser Fehlerart die richtige Reaktion ist.

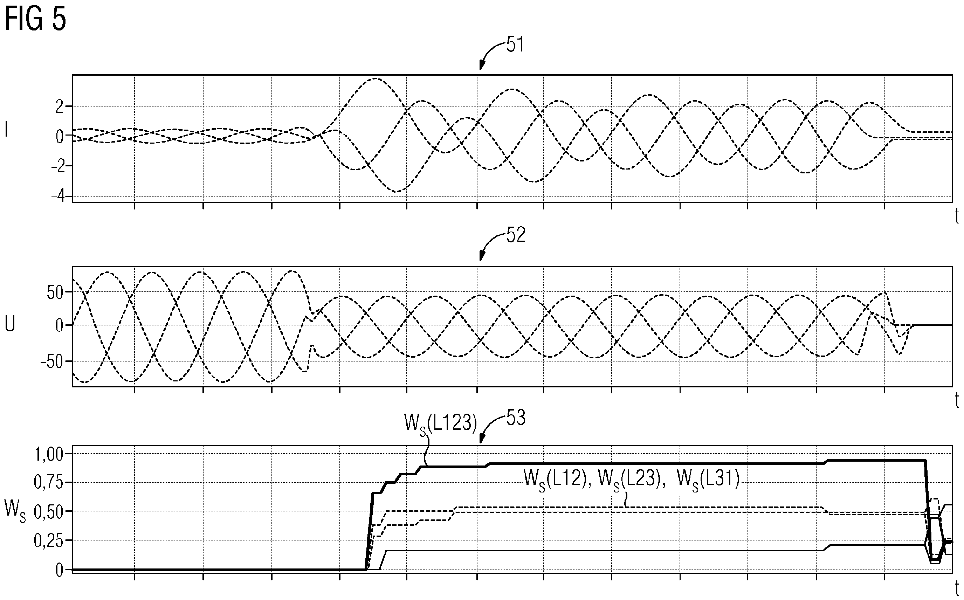

In Figur 5 sind typische zeitliche Verläufe der Ströme (Diagramm 51) und Spannungen (Diagramm 52) während eines dreipoligen Fehlers (L123) dargestellt. Diagramm 53 zeigt den Verlauf der schleifenspezifischen Wahrscheinlichkeitswerte $W_s$ für alle möglichen Schleifen. In diesem Fall wird für die dreipolige Schleife L123 ein hoher schleifenspezifischer Wahrscheinlichkeitswert $W_s(L123)$ berechnet. Da es sich um einen dreipoligen Fehler handelt, liegen auch die schleifenspezifischen Wahrscheinlichkeitswerte der zweipoligen Schleifen $W_s(L12)$, $W_s(L23)$, $W_s(L31)$ relativ hoch. Die einpoligen Schleifen werden dagegen niedriger bewertet.

Das in Figur 2 gezeigte Blockschaltbild zeigt generell die Vorgehensweise bei der Erzeugung eines eine Fehlerart angebenden Fehlersignals. Für die Fehlerart "Fehlerrichtung" muss zusätzlich die Besonderheit berücksichtigt werden, dass das jeweilige Schutzkriterium insgesamt drei Ergebnisse liefern kann (Wahrscheinlichkeit für vorwärts, rückwärts, ungerichtet), während bei der Fehlerart "fehlerbehaftete Schleife" jeweils nur ein Ergebnis (Wahrscheinlichkeit für Fehler in der betreffenden Schleife) bestimmt wird.

Die Gewichtungsfaktoren Gl...Gn sind bisher fest vorgegeben worden und wurden z.B. aus Erfahrungswerten, die mit ähnlichen Netzkonfigurationen gemacht worden sind, abgeleitet. Ein Beispiel einer festen Vorgabe von Gewichtungsfaktoren für 11 verschiedene Schutzkriterien ist schematisch in Figur 6 dargestellt. Solche fest vorgegebenen Gewichtungsfaktoren stellen meist den bestmöglichen Kompromiss für verschiedenste Betriebszustände des Energieversorgungsnetzes dar, sind jedoch nicht optimal auf jeden spezifischen Betriebszustand angepasst.

Daher werden die Gewichtungsfaktoren nunmehr abhängig von einem aktuellen Betriebszustand des Energieversorgungsnetzes angepasst. Auf diese Weise kann die Angabe der Fehlerart (z.B. Auswahl der fehlerbehafteten Schleife) weiter verbessert werden. Hiermit wird dazu beigetragen, die Fehlerart noch eindeutiger bestimmen zu können. Exemplarisch sollen die grundlegenden Überlegungen hierzu anhand eines Beispiels verdeutlicht werden.

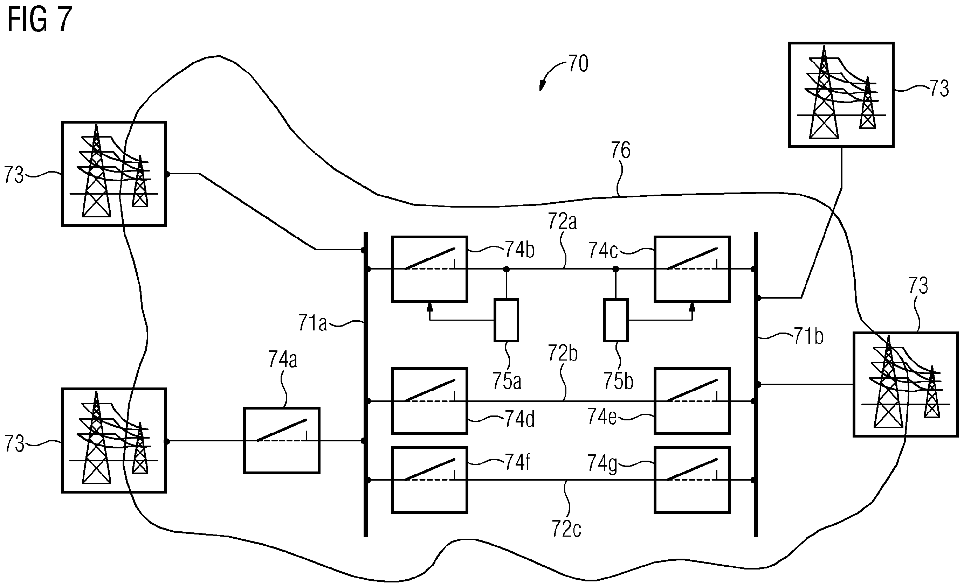

Hierzu zeigt Figur 7 beispielhaft einen Netzteil 70 eines ansonsten nicht näher dargestellten Energieversorgungsnetzes. Zwischen zwei Sammelschienen 71a, 71b befinden sich drei Leitungen 72a, 72b, 72c. Die Sammelschienen 71a, b sind jeweils von zwei unterschiedlichen Quellen 73 gespeist, die hier lediglich beispielhaft angedeutet sind. Schalteinrichtungen 74a-g dienen zur Unterbrechung des Stromflusses an ausgewählten Stellen in dem dargestellten Netzteil 70.

Nachfolgend soll die Leitung 72a näher betrachtet werden, die von zwei Schutzeinrichtungen 75a und 75b überwacht wird. Bei den Schutzeinrichtungen kann es sich z.B. um Schutzgeräte der SIPROTEC-Familie der Patentanmelderin handeln. Durch verschiedene Schalthandlungen bezüglich der Schalteinrichtungen 74a-g lassen sich die Einspeiseverhältnisse der Leitung 72a und damit der aktuelle Betriebszustand des Energieversorgungsnetzes in der durch die Linie 76 angedeuteten Schutzbereichszone verändern. Außerdem verändert sich je nach Schaltstellung und Höhe der Einspeisung die magnetische Kopplung der Leitung 72a mit den parallel verlaufenden Leitungen 72b und 72c, wodurch ebenfalls der aktuelle Betriebszustand beeinflusst wird.

Hier sollen beispielhaft vier Betriebszuständen herausgegriffen werden, welche in der folgenden Tabelle definiert sind. Bei allen Betriebszuständen sind die Schalteinrichtungen 74b und 74c geschlossen und damit die Leitung 72a aktiviert.

| Betriebszustand | Beschreibung |
|---|---|
| 1. Schwache Einspeisung bei schwacher Kopplung | Parallelleitung 72b ist zugeschaltet (Schalteinrichtungen 74d und 74e geschlossen), die Schalteinrichtungen 74a, 74f und 74g sind offen. |
| 2. Schwache Einspeisung bei starker Kopplung | Beide Parallelleitungen 72b und 72c sind zugeschaltet (Schalteinrichtungen 74d-g geschlossen), Schalteinrichtung 74a ist offen. |
| 3. Starke Einspeisung bei starker Kopplung | Beide Parallelleitungen 72b und 72c sind zugeschaltet, durch Einschaltung der Schalteinrichtung 74a ergibt sich eine starke Einspeisung. |
| 4. Starke Einspeisung ohne Kopplung | Beide Parallelleitungen 72b und 72c sind abgeschaltet, lediglich Schalteinrichtung 74a ist geschlossen und erzeugt eine starke Einspeisung auf der Leitung 72a. |

Bei diesen Betriebszuständen lassen sich als Einflussfaktoren auf die Schutzkriterien zur Erkennung der Fehlerart insbesondere die Einspeisung und die magnetische Kopplung mit den Parallelleitungen identifizieren.

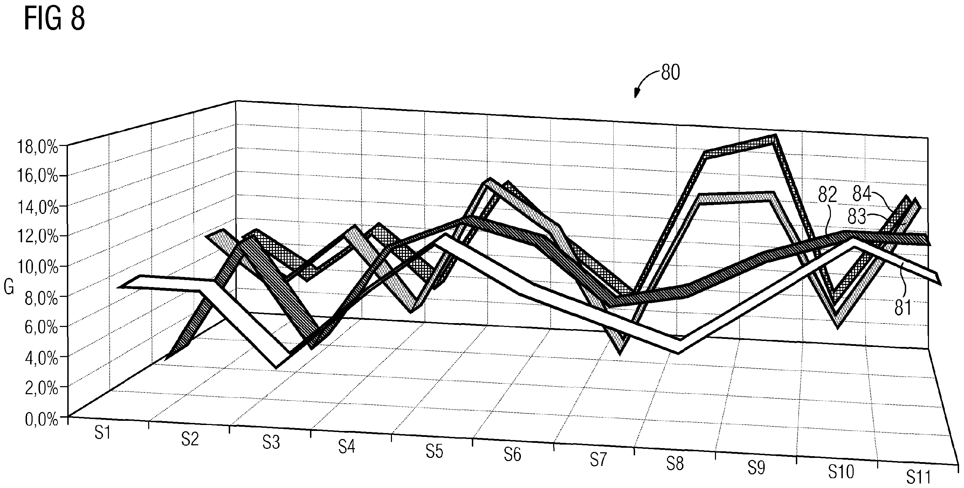

Je nachdem, wie groß die Einspeisung ist bzw. wie stark die Kopplung mit den Parallelleitungen 72b und 72c ist, ergeben sich unterschiedliche Gewichtungsfaktoren Gl...Gn für die einzelnen Kriterien. Dies ist beispielhaft und lediglich schematisch im Diagramm 80 in Figur 8 angedeutet. Das Diagramm zeigt für die vier in der oben dargestellten Tabelle angegebenen Betriebszustände je einen Satz von Gewichtungsfaktoren Gl...Gn zur Gewichtung der verschiedenen Schutzkriterien S1-S11. Dabei stellen eine erste Linie 81 den Satz von Gewichtungsfaktoren für den in der Tabelle genannten ersten Betriebszustand (schwache Einspeisung, schwache Kopplung), eine zweite Linie 82 den Satz von Gewichtungsfaktoren für den in der Tabelle genannten zweiten Betriebszustand (schwache Einspeisung, starke Kopplung), eine dritte Linie 83 den Satz von Gewichtungsfaktoren für den in der Tabelle genannten dritten Betriebszustand und eine vierte Linie 84 den Satz von Gewichtungsfaktoren für den in der Tabelle genannten vierten Betriebszustand dar. Beispielsweise liefern stromhöhe-basierte Schutzkriterien (z.B. S8, S9) bei starker Einspeisung deutlich bessere Ergebnisse als die spannungshöhe-basierten Schutzkriterien (z.B. S2, S10). Im Bezug auf die Zuverlässigkeit der Erkennung der Fehlerart bedeutet dies Folgendes: Wird z.B. eine starke Einspeisung am Einbauort der Schutzeinrichtung 75a erkannt, so muss die Gewichtung von stromhöhebasierten Schutzkriterien entsprechend erhöht, die der spannungshöhe-basierten Schutzkriterien verringert werden. Dadurch kann die Fehlerart besonders zuverlässig ermittelt werden, da die für den jeweiligen Betriebszustand aussagekräftigen Schutzkriterien besonders ins Gewicht fallen.

Analog zu diesem einfachen Beispiel lassen sich zahlreiche weitere Betriebsparameter definieren, die sich auf die Fähigkeit der einzelnen Schutzkriterien, eine Fehlerart eines Fehlers im Energieversorgungsnetz selektiv zu erkennen, auswirken.

Zur Erhöhung der Zuverlässigkeit bei der Erkennung der Fehlerart ist somit einerseits eine Erkennung des aktuellen Betriebszustands des Energieversorgungsnetzes durchzuführen. Der Betriebszustand kann beispielsweise anhand von Schaltzuständen von Schalteinrichtungen und/oder Messwerten elektrischer Messgrößen bestimmt werden. Anhand eines erkannten Betriebszustands werden dann in einem nachfolgenden Schritt die Gewichtungsfaktoren in der Weise festgelegt, dass eine möglichst optimale Erkennung der Fehlerart eines Fehlers stattfinden kann.

Die Anpassung der Gewichtungsfaktoren kann beispielsweise rein lokal in der Schutzeinrichtung (z.B. Schutzeinrichtung 12 in Figur 1) stattfinden. Hierzu kann vorgesehen sein, dass die Schaltstellung der zumindest einen Schalteinrichtung und/oder die Messwerte der zumindest einen elektrischen Messgröße von der Schutzeinrichtung 12 erfasst werden und der aktuelle Betriebszustand mittels der Auswerteinrichtung 14 der Schutzeinrichtung 12 ermittelt wird.

Auf diese Weise kann erreicht werden, dass die Berechnung der angepassten neuen Gewichtungsfaktoren in der Schutzeinrichtung 12 selbst durchgeführt wird. Für diesen Fall können beispielsweise vorberechnete Tabellen von Gewichtsfaktoren für die wahrscheinlichsten Betriebszustände des Energieversorgungsnetzes in einer Datenspeichereinrichtung der Schutzeinrichtung 12 hinterlegt werden. Eine Umschaltung zwischen den einzelnen Sätzen von Gewichtungsfaktoren kann in diesem Fall z.B. durch die Erfassung lokaler Betriebsmesswerte und/oder Schaltstellungen erfolgen. Ein Auswahlalgorithmus nutzt dann denjenigen Tabelleneintrag von Gewichtungsfaktoren, der für einen Betriebszustand ermittelt worden ist, der dem aktuell vorliegenden Betriebszustand am ähnlichsten ist.

Die Anpassung der Gewichtsfaktoren kann andererseits aber auch durch ein Zusammenspiel der Schutzeinrichtung 12 mit einer übergeordneten Leitstelleneinrichtung erfolgen.

Gemäß dieser Ausführungsform werden Messwerte und Schaltstellungen, die an verschiedenen Stellen im Energieversorgungsnetz aufgenommen worden sind, mit einer Leitstelleneinrichtung des Energieversorgungsnetzes analysiert und durch einen Optimierungsalgorithmus die Gewichtungsfaktoren in Abhängigkeit des sich ändernden aktuellen Betriebszustands berechnet. Die angepassten Gewichtungsfaktoren werden über eine Kommunikationsverbindung von der Leitstelleneinrichtung an die Schutzeinrichtung übertragen und dort für den laufenden Betrieb übernommen. Die Schutzeinrichtung kann daraufhin für die vorherrschende Netzsituation optimiert betrieben werden.

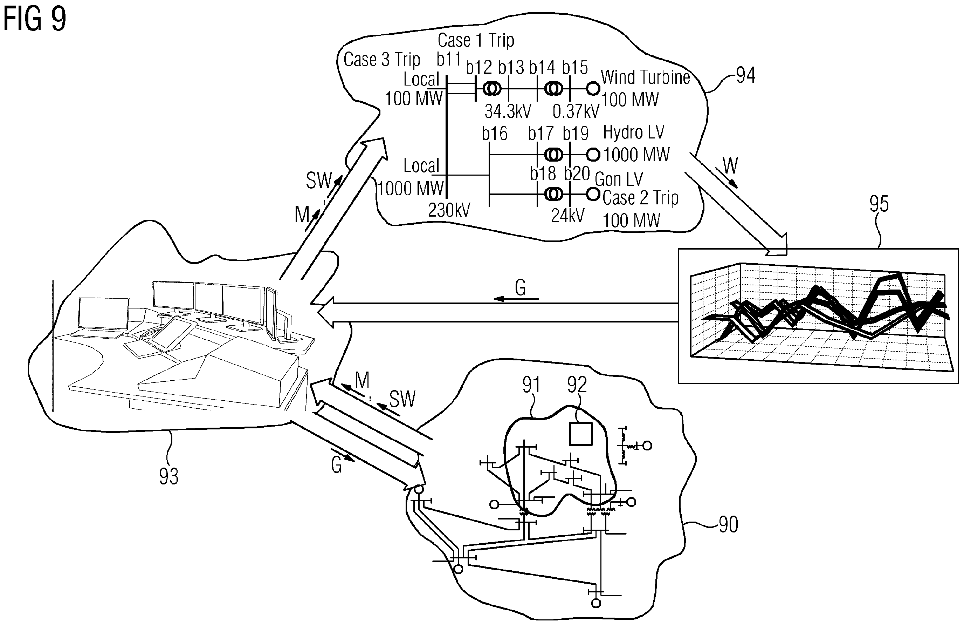

Dies ist beispielhaft in Figur 9 gezeigt. In Figur 9 ist hierzu schematisch ein Energieversorgungsnetz 90 dargestellt. Innerhalb des Energieversorgungsnetzes 90 ist ein Netzteil 91 als Schutzzone markiert, in dem der im Zusammenhang mit Figur 2 beschriebene Algorithmus zur Erkennung einer Fehlerart durchgeführt wird. Dem Netzteil 91 sind die mehrere Schutzeinrichtungen zugeordnet, von denen in der Figur 9 der besseren Übersicht halber lediglich die Schutzeinrichtung 92 dargestellt ist. Die Schutzeinrichtungen führen übliche Schutzalgorithmen, z.B. einen Distanzschutzalgorithmus, zur Überwachung des Netzteils 91 durch. Dazu nehmen sie Messwerte M elektrischer Messgrößen /z.B. Strom, Spannung) an geeigneten Messstellen des Energieversorgungsnetzes 90 auf und verarbeiten diese mit dem Schutzalgorithmus. Außerdem werden die Messwerte M sowie Informationen über die Schaltstellungen SW von in dem Netzteil vorhandenen Last- und Leistungsschaltern über eine beliebige Kommunikationsverbindung (über die z.B. über das Protokoll IEC61850 Datentelegramme ausgetauscht werden) an eine Leitstelleneinrichtung 93, z.B. eine Netzleitstelle, übermittelt.

Die Schutzeinrichtungen verfügen über den oben erläuterten multikriteriellen Algorithmus zur Erkennung der Fehlerart, bei dem der Einfluss der einzelnen Schutzkriterien auf das Gesamtergebnis über Gewichtsfaktoren gesteuert werden kann.

Vorliegend ist vorgesehen, dass diese Gewichtungsfaktoren adaptiv und dynamisch an einen aktuellen Betriebszustand angepasst werden können. Zur Anregung einer solchen Anpassung kann beispielsweise vorgesehen sein, dass die Schutzeinrichtungen der Leitstelleneinrichtung eine Aufforderung übermitteln, dass eine Anpassung notwendig ist. Die Ursache dieser Aufforderung kann z.B. ein steigender Lastfluss bzw. Änderungen der Schaltstellungen sein, was lokal von der jeweiligen Schutzeinrichtung anhand von erfassten Messwerten und Schaltstellungen auf einfache Art und Weise feststellbar ist.

Auch die Leitstelleneinrichtung 93 führt eine Beobachtung des Energieversorgungsnetzes 90, insbesondere auch des Netzteils 91, mithilfe der von mehreren Schutzeinrichtungen übermittelten Messwerte und Schaltstellungen durch. Somit hat die Leitstelleneinrichtung 93 im Vergleich zur einzelnen Schutzeinrichtung (z.B. Schutzeinrichtung 92) eine übergreifende Sicht über den Zustand des Energieversorgungsnetzes 90. Zur Überwachung können von der Leitstelleneinrichtung 93 übliche Überwachungsmethoden durchgeführt werden, wie sie in Netz- und Stationsleitstellen eingesetzt werden.

Insbesondere kann die Leitstelleneinrichtung 93 in diesem Zusammenhang auch eigenständig über die Notwendigkeit der Anpassung der Gewichtungsfaktoren entscheiden. Dies kann z.B. anhand der von den Schutzeinrichtungen des Netzteils 91 übermittelten Messwerte und Schaltstellungen, aber auch anhand bekannter Fahrpläne erfolgen, die von der Leitstelleneinrichtung zum Betrieb des Energieversorgungsnetzes verwendet werden. Darüber hinaus kann die Leitstelleneinrichtung auch über Informationen verfügen, die den Schutzeinrichtungen im Netzteil 91 nicht bekannt sind, z.B. weil sie außerhalb des Netzteils 91 erfasst worden sind oder weil sie mit Messeinrichtungen in dem Netzteil 91 erfasst worden sind, die nicht mit den Schutzeinrichtungen, sondern nur mit der Leitstelleneinrichtung in Verbindung stehen. Diese Informationen können relevante Zustandsänderungen des Energieversorgungsnetzes beinhalten, die das Verhalten des multikriteriellen Algorithmus beeinflussen können. Im Falle einer Veränderung des aktuellen Betriebszustands des Energieversorgungsnetzes muss eine Anpassung der Gewichtsfaktoren erfolgen, damit die Schutzeinrichtungen ihre Schutzaufgaben optimal ausführen können.

Um eine solche Anpassung durchzuführen, ist der Netzteil 91 auf der Leitstelleneinrichtung 93 durch ein mathematisches Netzmodell 94 abgebildet, in dem Simulationen anhand der Messwerte M und der Schaltstellungen SW durchgeführt werden können. Die in dem Netzmodell außenliegenden Verbindungsknoten, die einen Übergang zwischen dem Netzteil 91 und dem restlichen Energieversorgungsnetz darstellen, können durch den Lastfluss treibende Strom- bzw. Spannungsquellen abgebildet werden. Durch Simulation werden in dem Netzmodell Kurzschlüsse modelliert. Mit den aus der Simulation hervorgehenden simulierten Messwerten werden Nachbildungen der in den Schutzeinrichtungen implementierten Schutzkriterien beaufschlagt und deren Reaktion ermittelt. Hierzu ist in der Leitstelle eine Nachbildung des multikriteriellen Algorithmus implementiert, der auch auf den Schutzeinrichtungen vorliegt.

Es bietet sich an, pro Schutzeinrichtung mittels der Leitstelleneinrichtung mehrere Kurzschlüsse zu simulieren, wobei die größte Konzentration der simulierten Kurzschlüsse nahe der betrachteten Schutzeinrichtung durchgeführt werden sollte, da weit entfernte Kurzschlüsse einen geringeren Einfluss auf die Reaktion der jeweiligen Schutzeinrichtung haben. Die Bestimmung der Konzentration der Kurzschlüsse kann über die einfache Reichweite einer Hauptschutzzone bzw. -stufe erfolgen. Da es zu gewährleisten ist, dass der Schutz nicht übergreift, sind Kurzschlüsse an den Grenzen der Zone/Stufe mit einer absteigenden Häufung durchzuführen. Um ein besseres Bild der Kurzschlüsse bekommen zu können, sollen auch kleine Lastflussfluktuationen eingeführt werden.

Da die Simulation für die Kurzschlüsse auf den multikriteriellen Algorithmus zurückgreift, werden automatisch die gesuchten Antworten der einzelnen Schutzkriterien geliefert. Alternativ könnten aber auch mit beliebigen anderen Simulationsumgebungen die Reaktionen der jeweiligen Schutzkriterien einzeln oder in Gruppen durch Simulation ermittelt werden. Die Antworten W der einzelnen Schutzkriterien auf die simulierten Kurzschlüsse, die den Wahrscheinlichkeitswerten $W_k$ (siehe Figur 2) entsprechen, werden daraufhin einem Optimierungsalgorithmus 95 übermittelt, der ebenfalls auf der Leitstelleneinrichtung 93 durchgeführt wird.

Der Optimierungsalgorithmus hat zum Ziel, die Gewichtsfaktoren der einzelnen Schutzkriterien so anzupassen, dass die in dem jeweils aktuellen Betriebszustand zuverlässigen Schutzkriterien verstärkt in die Ermittlung der Fehlerart eingehen, die unzuverlässigen Schutzkriterien hingegen unterdrückt werden.

Beispielsweise kann die Optimierung wie folgt durchgeführt werden: Aus den simulierten Kurzschlüssen ergibt sich eine Vielzahl an Daten, aus denen über eine mathematische Optimierung die Gewichtungsfaktoren ermittelt werden. Die Schutzkriterien liefern jeweils Wahrscheinlichkeitswerte W für die drei einpoligen Schleifen (L1E, L2E, L3E), die drei zweipoligen Schleifen (L12, L23, L31) und die eine dreipolige Schleife (L123). Beispielhaft sei angenommen, dass es elf implementierte Schutzkriterien gibt, so dass sich pro Kurzschluss elf Wahrscheinlichkeitswerte für jede der sieben möglichen Fehlerschleifen ergeben. Für einen Kurzschluss liegen demnach 77 Wahrscheinlichkeitswerte W vor, deren Wertebereich jeweils [0;1] ist.

Daraus ergibt sich folglich ein Gleichungssystem der Form

$$A \cdot x = b:$$

$$\begin{bmatrix} W_{1,1} & \cdots & W_{1,11} \\ \vdots & \ddots & \vdots \\ W_{7,1} & \cdots & W_{7,11} \end{bmatrix} \cdot \begin{bmatrix} G_1 \\ \vdots \\ G_{11} \end{bmatrix} = \begin{bmatrix} Q_1 \\ \vdots \\ Q_{11} \end{bmatrix}$$

unter den Nebenbedingungen

$$\sum_{j=1}^{11} j = 1$$

$$0 \leq G_j \leq 1$$

Dabei bezeichnen $W_{i,j}$ die Wahrscheinlichkeitswerte der Schutzkriterien **j** für die möglichen Fehlerschleifen **i** und $G_j$ die Gewichtsfaktoren. $Q_j$ sind die zu optimierenden Ergebnisse des Gleichungssystems. Dabei gilt, dass die Ergebnisse $Q_j$ der fehlerbehafteten Schleifen maximiert, die Ergebnisse $Q_j$ der fehlerfreien Schleifen hingegen minimiert werden müssen.

Die Matrix der Wahrscheinlichkeitswerte $W_{i,j}$ im oben beschriebene Gleichungssystem enthält pro simuliertem Kurzschluss sieben Zeilen, folglich ergibt sich für das Gleichungssystem eine Überbestimmtheit, da eine große Anzahl an Gleichungen durch die Variation von lediglich elf Parametern optimiert werden muss. Allerdings lässt sich keine eindeutige Lösung finden, vielmehr gibt es unendlich viele Lösungen, aus denen durch einen geeigneten Optimierungsansatz eine für das Problem sinnvolle Lösung gefunden werden muss. Einfache Optimierungsansätze stoßen hier an ihre Grenzen, da sie zu trivialen Lösungen neigen. Diese Art von Problemen wird in der Mathematik als überbestimmt, invers und schlecht gestellt bezeichnet.

Durch den Ansatz der Regularisierung kann dem jedoch begegnet werden. Dabei wird das Optimierungsproblem in ein Ersatzproblem überführt, das durch zusätzliche Informationen und Vorgaben besser gelöst werden kann. Durch diese Vorgehensweise kann eine für die Praxis sinnvolle und zufriedenstellende Lösung gefunden werden. Die Regularisierung bewirkt durch die Einführung zusätzlicher Parameter eine Stabilisierung des Lösungsvektors. Allerdings darf der Einfluss der Stabilisierung auch nicht zu groß sein, ansonsten spiegelt die gefundene Lösung nicht die für die Praxisanwendung optimale Lösung wider.

Folglich gilt es, einen möglichst guten Ausgleich zwischen optimaler und regularisierter Lösung zu schaffen.

Das oben bereits beschriebene Problem der Form **A·x=b** wird dazu in ein Problem der Form

$$A_{reg} = A^T + I \cdot \lambda$$

$$b_{reg} = A^T \cdot W \cdot b$$

überführt, mit

$A_{reg}$ ...Regularisierte Matrix, überführt aus A;
$A^T$ ...Transponierte Matrix A;
$I$ ...Einheitsmatrix der Größe [11 × 11];
$b_{reg}$ ...Regularisierte Matrix, überführt aus b;
$\lambda$ ...Regularisierungsparameter.

Die Höhe des Regularisierungsparameters $\lambda$ spiegelt den Ausgleich zwischen regularisierter und optimaler Lösung wider, man erhält diesen durch den sogenannten Tichonow-Algorithmus, aus dem sich ebenso die regularisierten Matrizen **A$_{reg}$** und **b$_{reg}$** ergeben. Durch Auflösen der beiden Gleichungen erhält man die Gleichung

$$A_{reg} \cdot x = b_{reg} + I \cdot \lambda.$$

Diese Gleichung beinhaltet die aus der ursprünglichen Matrix **A** überführten Ergebnisse in regularisierter Form. **A$_{reg}$** ist nun eine quadratische Matrix, das Problem lässt sich daher mit Hilfe des Konjugierte-Gradienten-Verfahren deutlich besser lösen als das Ursprungsproblem. Der Vorteil hierbei ist, dass dies ein zielgerichtetes Verfahren ist und somit deutlich bessere, nicht-triviale Ergebnisse liefert. Zusammenfassend kann der Prozess der Bestimmung der Gewichtungsfaktoren folgendermaßen beschrieben werden:
Durch die Schutzeinrichtung und/oder die Leitstelleneinrichtung wird die Notwendigkeit einer Anpassung der Gewichtungsfaktoren erkannt. Ggf. wird eine entsprechende Anforderung von der Schutzeinrichtung an die Leitstelleneinrichtung übermittelt.

Messwerte und/oder Schaltstellungen des realen Energieversorgungsnetzes werden an die Leitstelleneinrichtung übertragen. Mittels eines mathematischen Netzmodells werden unter Verwendung der aktuellen Messwerte und/oder Schaltstellungen Störfälle, insbesondere Kurzschlüsse simuliert. Die Reaktion der einzelnen Schutzkriterien auf die simulierten Störfälle wird betrachtet.

Für jede mögliche Fehlerschleife und jedes Schutzkriterium werden die sich aus der Simulation ergebenden Wahrscheinlichkeitswerte einem Optimierungsalgorithmus zugeführt. Mittels Regularisierung wird das Optimierungsproblem in ein Ersatzproblem überführt und dieses anschließend optimiert.

Die Optimierung ermittelt Gewichtungsfaktoren, die diejenigen Schutzkriterien, die den simulierten Störfall korrekt erkannt haben, stärker gewichten, und diejenigen Schutzkriterien, die den simulierten Störfall schlechter oder nicht korrekt erkannt haben, weniger stark gewichten.

Die bestimmten Gewichtungsfaktoren G werden anschließend von der Leitstelleneinrichtung an die einzelnen Schutzeinrichtungen übermittelt und dort für den laufenden Betrieb implementiert.

Mittels des beschriebenen Verfahrens lässt sich vorteilhaft erreichen, dass die Fehlerarterkennung durch die Schutzeinrichtungen sich adaptiv an den jeweils aktuellen Betriebszustand des Energieversorgungsnetzes anpassen kann. Durch die Anpassung der Gewichtungsfaktoren wird eine verbesserte Fehlerarterkennung und somit verbesserte Selektivität gewährleistet.

Voranstehend wurde ein Algorithmus beschrieben, mit dem ein eine Fehlerart angebendes Fehlersignal besonders vorteilhaft erzeugt werden kann. Ein besonderer Vorteil besteht darin, dass zur Entscheidung über die Fehlerart mehrere Schutzkriterien parallel ausgewertet werden und die Ergebnisse aller Auswertungen in die Erzeugung des Fehlersignals einfließen. Der beschriebene Algorithmus kann sehr flexibel auf neue Netzbedingungen und Netzkonstellationen angepasst werden, da er eine adaptive Anpassung der Gewichtungsfaktoren der einzelnen Schutzkriterien vorsieht.

Durch Auswahl geeigneter Schutzkriterien kann der Algorithmus sehr flexibel an das jeweilige Energieversorgungsnetz angepasst werden. Im Zuge der verstärkt stattfindenden bidirektionalen Energieübertragung in Energieversorgungsnetzen werden sich die Netzkonfiguration sowie die Kurzschlussleitung des Netzes häufiger ändern. Der beschriebene Algorithmus stellt eine zukunftsorientierte Smart Grid Applikation im Umfeld einer digitalen Schaltstation ("Digital Substation") dar. Er gewährleistet eine verbesserte Stabilität bei der Schleifenauswahl und Richtungserkennung, was die Grundlage für das korrekte Funktionieren eines beliebigen Schutzalgorithmus, z.B. eines Distanzschutzalgorithmus, ist.

**Patentansprüche**

1. Verfahren zum Erzeugen eines eine Fehlerart eines Fehlers in einem mehrphasigen elektrischen Energieversorgungsnetz (90) angebenden Fehlersignals (F), bei dem

   - an mindestens einer Messstelle in dem Energieversorgungsnetz (90) Messwerte erfasst werden und an eine Schutzeinrichtung (92) übermittelt werden;
   - mittels einer Auswerteinrichtung der Schutzeinrichtung (92) unter Verwendung der Messwerte jede mögliche Schleife des Energieversorgungsnetzes (90), die von einem Fehler betroffen sein kann, hinsichtlich der Erkennung der Fehlerart eines Fehlers ausgewertet wird, indem für jede mögliche Schleife die Messwerte und/oder aus den Messwerten abgeleitete Werte unter Verwendung von zumindest zwei unterschiedlichen Schutzkriterien (S1...Sn) ausgewertet werden, wobei jedes der Schutzkriterien dazu geeignet ist, auf eine Fehlerart eines vorliegenden Fehlers in der jeweils ausgewerteten Schleife hinzuweisen;
   - das Ergebnis der Auswertung des jeweiligen Schutzkriteriums unter Bildung eines gewichteten Ergebnisses mit einem jeweiligen Gewichtungsfaktor (G1...Gn) multipliziert wird;
   - für jede mögliche Schleife alle gewichteten Ergebnisse unter Bildung eines Gesamtergebnisses (20) verknüpft werden; und
   - bei Vorliegen eines Fehlers das Fehlersignal (F) unter Berücksichtigung aller vorliegenden Gesamtergebnisse der Auswertung der Schutzkriterien erzeugt wird wobei
   - die Höhe der jeweiligen Gewichtungsfaktoren in Abhängigkeit von einem aktuellen Betriebszustand des Energieversorgungsnetzes (90) gewählt wird, wobei
   - zur Ermittlung des aktuellen Betriebszustands mindestens eine Schaltstellung zumindest einer in dem Energieversorgungsnetz angeordneten Schalteinrichtung und/oder an zumindest einer Messstelle in dem Energieversorgungsnetz (90) erfasste Messwerte zumindest einer elektrischen Messgröße herangezogen werden,

   **dadurch gekennzeichnet, dass**

   - die Schaltstellung der zumindest einen Schalteinrichtung und/oder die Messwerte der zumindest einen elektrischen Messgröße von einer der Schutzeinrichtung (92) übergeordneten Leitstelleneinrichtung (93) erfasst werden; und
   - der aktuelle Betriebszustand von der Leitstelleneinrichtung (93) ermittelt wird; wobei
   - zur Bestimmung der Höhe der jeweiligen Gewichtungsfaktoren von der Leitstelleneinrichtung (93) unter Verwendung eines zumindest einen Teil des Energieversorgungsnetzes beschreibenden mathematischen Netzmodells und des aktuellen Betriebszustands des Energieversorgungsnetzes eine Simulation zumindest eines Fehlers in dem Energieversorgungsnetz durchgeführt wird, wobei ein solcher Fehler simuliert wird, der im Energieversorgungsnetz zu einer Abgabe des Fehlersignals durch die Schutzeinrichtung (92) führen soll, wobei
   - zur Bestimmung der Höhe der jeweiligen Gewichtungsfaktoren die Reaktionen der zumindest zwei Schutzkriterien auf den simulierten Fehler betrachtet wird; und
   - die Gewichtungsfaktoren in der Weise festgelegt werden, dass ein solches Schutzkriterium, das den simulierten Fehler korrekt erkannt hat, gegenüber einem solchen Schutzkriterium, das den simulierten Fehler nicht korrekt erkannt hat, mit einem höheren Gewichtungsfaktor (G1 ... Gn) multipliziert wird.

2. Verfahren nach Anspruch 1,
   **dadurch gekennzeichnet, dass**

- zur Ermittlung des aktuellen Betriebszustands von der Leitstelleneinrichtung (93) Schaltstellungen einer Mehrzahl von Schalteinrichtungen und/oder an zumindest zwei unterschiedlichen Messstellen erfasste Messwerte der zumindest einen elektrischen Messgröße herangezogen werden.

3. Verfahren nach Anspruch 2,
   **dadurch gekennzeichnet, dass**

   - die Leitstelleneinrichtung (93) Schaltstellungen und/oder Messwerte von mehreren Mess- oder Schutzeinrichtungen des Energieversorgungsnetzes empfängt; und
   - den aktuellen Betriebszustand des Energieversorgungsnetzes unter Verwendung der empfangenen Schaltstellungen und/oder Messwerte ermittelt.

4. Verfahren nach einem der vorangehenden Ansprüche,
   **dadurch gekennzeichnet, dass**

   - die von der Leitstelleneinrichtung (93) bestimmten Gewichtungsfaktoren an die Schutzeinrichtung (92) übertragen und von der Schutzeinrichtung (92) zur Bildung des Fehlersignals verwendet werden.

5. Verfahren nach einem der vorangehenden Ansprüche,
   **dadurch gekennzeichnet, dass**

   - eine Anpassung der Gewichtungsfaktoren durch die Leitstelleneinrichtung (93) und/oder die Schutzeinrichtung (92) veranlasst wird.

6. Verfahren nach einem der vorangehenden Ansprüche,
   **dadurch gekennzeichnet, dass**

   - die Schutzkriterien parallel zueinander ausgewertet werden.

7. Verfahren nach einem der vorangehenden Ansprüche,
   **dadurch gekennzeichnet, dass**

   - für jede mögliche Schleife die Gewichtungsfaktoren für alle ausgewerteten Schutzkriterien so gewählt werden, dass ihre Summe 1 ergibt.

8. Verfahren nach einem der vorangehenden Ansprüche,
   **dadurch gekennzeichnet, dass**

   - das Fehlersignal nur dann erzeugt wird, wenn das Gesamtergebnis zumindest einer möglichen Schleife einen Fehlererkennungs-Schwellenwert überschreitet.

9. Verfahren nach einem der vorangehenden Ansprüche,
   **dadurch gekennzeichnet, dass**

   - das jeweilige Ergebnis der Auswertung des jeweiligen Schutzkriteriums in Form eines schutzkriterienspezifischen Wahrscheinlichkeitswerts gebildet wird, der angibt, mit welcher Wahrscheinlichkeit gemäß dem ausgewerteten Schutzkriterium ein Fehler mit der Fehlerart vorliegt; und
   - das jeweilige Gesamtergebnis in Form eines schleifenspezifischen Wahrscheinlichkeitswerts gebildet wird, der angibt, mit welcher Wahrscheinlichkeit in der betrachteten Schleife ein Fehler mit der Fehlerart vorliegt.

10. System zum Erzeugen eines eine Fehlerart eines Fehlers in einem mehrphasigen elektrischen Energieversorgungsnetz (90) angebenden Fehlersignals, mit

   - einer Schutzeinrichtung (92), die eine Messwerterfassungseinrichtung zum Erfassen von an mindestens einer Messstelle in dem Energieversorgungsnetz (90) aufgenommenen Messwerten und eine Auswerteinrichtung umfasst; und
   - einer der Schutzeinrichtung (92) übergeordneten Leitstelleneinrichtung (93);

**dadurch gekennzeichnet, dass**

- das System dazu eingerichtet ist, ein Verfahren gemäß einem der Ansprüche 1 bis 9 auszuführen.

**Claims**

1. Method for generating an error signal (F) indicating an error type of an error in a multiphase electrical energy supply network (90), in which

   - measured values are detected at at least one measurement point in the energy supply network (90) and are transmitted to a protection device (92);
   - each possible loop of the energy supply network (90) that can be affected by an error is evaluated with respect to the recognition of the error type of an error, by means of an evaluation device of the protection device (92), using the measured values by virtue of, for each possible loop, the measured values and/or values derived from the measured values being evaluated using at least two different protection criteria (S1...Sn), wherein each of the protection criteria is suitable for identifying an error type of an error present in the respectively evaluated loop;
   - the result of the evaluation of the respective protection criterion is multiplied by a respective weighting factor (G1...Gn) to form a weighted result;
   - for each possible loop, all the weighted results are combined to form an overall result (20); and
   - if an error is present, the error signal (F) is generated, taking into account all the present overall results of the evaluation of the protection criteria, wherein
   - the magnitude of the respective weighting factors is chosen depending on a current operating state of the energy supply network (90), wherein
   - at least one switching position of at least one switching device arranged in the energy supply network and/or measured values of at least one electrical measurement variable that are detected at at least one measurement point in the energy supply network (90) are used to ascertain the current operating state, **characterized in that**
   - the switching position of the at least one switching device and/or the measured values of the at least one electrical measurement variable are detected by a control centre device (93) superordinate to the protection device (92); and
   - the current operating state is ascertained by the control centre device (93); wherein
   - a simulation of at least one error in the energy supply network is carried out by the control centre device (93), using a mathematical network model, which describes at least part of the energy supply network, and the current operating state of the energy supply network, to determine the magnitude of the respective weighting factors, wherein an error that, in the energy supply network, is intended to cause the protection device (92) to output the error signal is simulated, wherein
   - the reactions of the at least two protection criteria to the simulated error are observed to determine the magnitude of the respective weighting factors; and
   - the weighting factors are established in such a way that a protection criterion that has correctly recognized the simulated error is multiplied by a higher weighting factor (G1...Gn) than a protection criterion that has not correctly recognized the simulated error.

2. Method according to Claim 1,
   **characterized in that**

   - switching positions of a plurality of switching devices and/or measured values of the at least one electrical measurement variable that are detected at at least two different measurement points are used by the control centre device (93) to ascertain the current operating state.

3. Method according to Claim 2,
   **characterized in that**

   - the control centre device (93) receives switching positions and/or measured values from multiple measurement or protection devices of the energy supply network; and
   - ascertains the current operating state of the energy supply network using the received switching positions and/or measured values.

4. Method according to one of the preceding claims,

**characterized in that**

- the weighting factors determined by the control centre device (93) are transferred to the protection device (92) and are used by the protection device (92) to form the error signal.

5. Method according to one of the preceding claims,
**characterized in that**

- an adjustment of the weighting factors is prompted by the control centre device (93) and/or the protection device (92).

6. Method according to one of the preceding claims, **characterized in that**

- the protection criteria are evaluated in parallel with one another.

7. Method according to one of the preceding claims,
**characterized in that**

- for each possible loop, the weighting factors for all the protection criteria evaluated are chosen such that the sum thereof is equal to 1.

8. Method according to one of the preceding claims,
**characterized in that**

- the error signal is only generated when the overall result of at least one possible loop exceeds an error recognition threshold value.

9. Method according to one of the preceding claims,
**characterized in that**

- the respective result of the evaluation of the respective protection criterion is formed as a protection criteria-specific probability value that indicates the probability, according to the protection criterion evaluated, of the presence of an error with the error type; and
- the respective overall result is formed as a loop-specific probability value that indicates the probability of the presence of an error with the error type in the loop considered.

10. System for generating an error signal indicating an error type of an error in a multiphase electrical energy supply network (90), having

- a protection device (92) that comprises a measured value detection device for detecting measured values recorded at at least one measurement point in the energy supply network (90), and an evaluation device; and
- a control centre device (93) superordinate to the protection device (92);

**characterized in that**

- the system is configured to perform a method according to one of Claims 1 to 9.


**Revendications**

1. Procédé de production d'un signal (F) de défaut indiquant un type d'un défaut dans un réseau (90) d'alimentation en énergie électrique polyphasé, dans lequel

- on relève des valeurs de mesure en au moins un point de mesure du réseau (90) d'alimentation en énergie et on les transmet à un dispositif (92) de protection ;
- au moyen d'un dispositif d'évaluation du dispositif (92) de protection et en utilisant les valeurs de mesure, on évalue chaque boucle possible du réseau (90) d'alimentation en énergie qui peut être concernée par un défaut, en ce qui concerne la reconnaissance du type d'un défaut, par le fait que l'on évalue pour chaque boucle possible les valeurs de mesure et/ou des valeurs déduites des valeurs de mesure en utilisant au moins deux critères (S1 ... Sn) de protection différents, chacun des critères de protection étant propre à indiquer un type d'un défaut présent dans la boucle évaluée respectivement ;

- on multiplie le résultat de l'évaluation du critère respectif de protection, en formant un résultat pondéré, par un facteur (G1 ... Gn) respectif de pondération ;

- pour chaque boucle possible, on combine tous les résultats pondérés en formant un résultat (20) d'ensemble ; et

- en présence d'un défaut, on produit le signal (F) de défaut en tenant compte de tous les résultats d'ensemble présents de l'évaluation des critères de protection, dans lequel

- on choisit le niveau des facteurs respectifs de pondération en fonction d'un état de fonctionnement en cours du réseau (90) d'alimentation en énergie, dans lequel

- pour la détermination de l'état de fonctionnement en cours, on tire parti au moins d'une position de coupure d'au moins un dispositif de coupure monté dans le réseau d'alimentation en énergie et/ou de valeurs de mesure, relevées en au moins un point du réseau (90) d'alimentation en énergie, d'au moins une grandeur électrique de mesure,

**caractérisé en ce que**

- on relève la position de coupure du au moins un dispositif de coupure et/ou les valeurs de mesure de la au moins une grandeur électrique de mesure par un dispositif (93) de poste de conduite supérieur hiérarchiquement au dispositif (92) de protection ; et

- on détermine l'état de fonctionnement en cours par le dispositif (93) de poste de conduite ; dans lequel

- pour la détermination du niveau des facteurs respectifs de pondération par le dispositif (93) de poste de conduite en utilisant au moins une partie du modèle mathématique de réseau décrivant le réseau d'alimentation en énergie et de l'état de fonctionnement en cours du réseau d'alimentation en énergie, on effectue une simulation d'au moins un défaut du réseau d'alimentation en énergie, dans lequel on simule un défaut tel qu'il doit donner dans le réseau d'alimentation en énergie une émission du signal de défaut par le dispositif (92) de protection, dans lequel

- pour la détermination du niveau des facteurs respectifs de pondération, on prend en considération les au moins deux critères de protection sur le défaut simulé ; et

- on fixe les facteurs de pondération de manière à ce qu'un critère de protection tel qu'il a reconnu correctement le défaut simulé soit, par rapport à un critère de protection tel qu'il n'a pas reconnu correctement le défaut simulé, multiplié par un facteur (G1 ... Gn) de pondération plus grand.

2. Procédé suivant la revendication 1,
   **caractérisé en ce que**

   - pour la détermination de l'état de fonctionnement en cours par le dispositif (93) de poste de conduite, on tire parti de position de coupure d'une pluralité de dispositifs de coupure et/ou de valeurs de mesure, relevées en au moins deux points de mesure différents, de la au moins une grandeur électrique de mesure.

3. Procédé suivant la revendication 2,
   **caractérisé en ce que**

   - le dispositif (93) de poste de conduite reçoit des positions de coupure et/ou des valeurs de mesure de plusieurs dispositifs de mesure ou de protection du réseau d'alimentation en énergie ;

   et

   - on détermine l'état de fonctionnement en cours du réseau d'alimentation en énergie en utilisant les positions de coupure et/ou les valeurs de mesure reçues.

4. Procédé suivant l'une des revendications précédentes,
   **caractérisé en ce que**

   - on transmet au dispositif (92) de protection les facteurs de pondération déterminés par le dispositif (93) de poste de conduite et on les utilise par le dispositif (92) de protection pour la formation du signal de défaut.

5. Procédé suivant l'une des revendications précédentes,

**caractérisé en ce que**

- on provoque une adaptation des facteurs de pondération par le dispositif (93) de poste de conduite et/ou par le dispositif (92) de protection.

6. Procédé suivant l'une des revendications précédentes,
**caractérisé en ce que**

- on évalue parallèlement entre eux les critères de protection.

7. Procédé suivant l'une des revendications précédentes,
**caractérisé en ce que**

- pour chaque boucle possible, on choisit les facteurs de pondération pour tous les critères de protection évalués de manière à ce que leur somme donne 1.

8. Procédé suivant l'une des revendications précédentes,
**caractérisé en ce que**

- on ne produit le signal de défaut que si le résultat d'ensemble d'au moins une boucle possible dépasse une valeur de seuil de reconnaissance de défaut.

9. Procédé suivant l'une des revendications précédentes,
**caractérisé en ce que**

- on forme le résultat respectif de l'évaluation du critère respectif de protection sous la forme d'une valeur de probabilité spécifique au critère de protection, qui indique la probabilité avec laquelle, suivant le critère de protection évalué, il y a un défaut ayant le type de défaut ; et
- on forme le résultat respectif d'ensemble sous la forme d'une valeur de probabilité spécifique à une boucle, qui indique la probabilité avec laquelle, dans la boucle considérée, il y a un défaut ayant le type de défaut.

10. Système de production d'un signal de défaut indiquant un type d'un défaut dans un réseau (90) d'alimentation en énergie électrique polyphasé, comprenant

- un dispositif (92) de protection, qui comprend un dispositif de relevé de mesure pour le relevé de valeurs de mesure enregistrées en au moins un point de mesure du réseau (90) d'alimentation en énergie, et un dispositif d'évaluation ; et
- un dispositif (93) de poste de conduite supérieur hiérarchiquement au dispositif (92) de protection,

**caractérisé en ce que**

- le système est conçu pour effectuer un procédé suivant l'une des revendications 1 à 9.

FIG 1

FIG 2

EP 3 376 622 B1

FIG 3

FIG 4

FIG 5

FIG 6

FIG 7

EP 3 376 622 B1

FIG 8

EP 3 376 622 B1

# FIG 9

EP 3 376 622 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2304857 B1
- WO 2016091334 A1